# EUROPEAN PATENT SPECIFICATION

(11) **EP 4 054 126 B1**
(45) Date of publication and mention of the grant of the patent: **08.01.2025**
(21) Application number: 20896998.0
(22) Date of filing: 11.08.2020
(51) Int. Cl.: H04L 41/5009, H04L 43/026, H04L 43/028, H04L 43/0829, H04L 43/0852

(54) **TRANSMISSION QUALITY TEST METHOD AND APPARATUS, SYSTEM, AND STORAGE MEDIUM**
VERFAHREN UND VORRICHTUNG ZUR PRÜFUNG DER ÜBERTRAGUNGSQUALITÄT, SYSTEM UND SPEICHERMEDIUM
PROCÉDÉ ET APPAREIL D'ÉVALUATION DE QUALITÉ DE TRANSMISSION, SYSTÈME, ET SUPPORT DE STOCKAGE

(30) Priority: 02.12.2019 CN 201911215536
(43) Date of publication of application: 07.09.2022
(73) Proprietor: Huawei Technologies Co., Ltd., Shenzhen, Guangdong 518129 (CN)
(72) Inventor: LI, Weidong, Shenzhen, Guangdong 518129 (CN); XIN, Fang, Shenzhen, Guangdong 518129 (CN); WANG, Xiaofei, Shenzhen, Guangdong 518129 (CN); ZHANG, Jie, Shenzhen, Guangdong 518129 (CN)
(74) Representative: Gill Jennings & Every LLP
(86) International application number: PCT/CN2020/108342
(87) International publication number: WO 2021/109610

(56) References cited:
- EP-A1- 3 554 024
- EP-A2- 1 764 955
- WO-A1-2006/012789
- CN-A- 107 453 884
- CN-A- 109 560 945
- CN-A- 109 561 300
- JP-A- 2015 039 157
- US-A1- 2015 180 788
- US-A1- 2019 288 938

## Description

### TECHNICAL FIELD

This application relates to the field of communication technologies, and in particular, to a transmission quality detection method, apparatus, and system, and a storage medium.

### BACKGROUND

An in-situ flow information telemetry (in-situ flow information telemetry, IFIT) technology is an important transmission quality detection technology, and works on the following detection principle: An IFIT extension header is inserted into a service packet, and transmission quality of a service flow is detected based on the IFIT extension header in the service packet. For example, the transmission quality is a packet loss amount or a transmission delay.

Currently, in the IFIT technology, after receiving a service packet, an ingress (ingress) device detects whether 5-tuple information of the service packet matches 5-tuple information that is of a to-be-detected service flow and that is delivered by a controller. If the 5-tuple information of the service packet matches the 5-tuple information that is of the to-be-detected service flow and that is delivered by the controller, the ingress device generates a flow identifier (FlowID) for a service flow (namely, the to-be-detected service flow) to which the service packet belongs, inserts an IFIT extension header into the service packet, and records the flow identifier in the IFIT extension header to obtain an IFIT service packet. Then, the ingress device forwards the IFIT service packet to a transit (transit) device, and the transit device forwards the IFIT service packet to an egress (egress) device. The egress device strips the IFIT extension header from the IFIT service packet to obtain the original service packet. In the foregoing process, each network device among the ingress device, the transit device, and the egress device collects statistics about transmission quality information of the service flow based on the FlowID in the IFIT extension header, and reports the FlowID of the service flow and the transmission quality information of the service flow to the controller. The controller determines transmission quality of the service flow based on the FlowID of the service flow and the transmission quality information of the service flow that are reported by each network device.

However, because in the current IFIT technology, transmission quality is detected at a granularity of a service flow identified by 5-tuple information, in a detection process, the network devices (including the ingress device, the transit device, and the egress device) are under great reporting pressure, and the controller is under great processing pressure. Consequently, the current IFIT technology is difficult to be applied to a large-scale transmission quality detection scenario.

US 20150180788A1 relates to operations, administration and management fields for packet transport.

### SUMMARY

Implementations of this application provide a transmission quality detection method, apparatus, and system, and a storage medium, and are applicable to a large-scale transmission quality detection scenario. Technical solutions in implementations of this application are as follows:

The invention has been defined in the independent claims. Further specific technical features have been defined in the dependent claims.

According to a first aspect, a transmission quality detection system is provided. The system includes a controller and a plurality of network devices, and the plurality of network devices include an ingress device and an egress device.

According to a second aspect, a transmission quality detection method is provided, and is applied to an ingress device in a communication network.

According to a third aspect, a transmission quality detection method is provided, and is applied to a controller in a communication network.

According to a fourth aspect, a transmission quality detection apparatus is provided. The transmission quality detection apparatus is configured to implement the transmission quality detection method according to any one of the second aspect.

According to a fifth aspect, a transmission quality detection apparatus is provided. The transmission quality detection apparatus is configured to implement the transmission quality detection method according to any one of the third aspect.

The technical solutions provided in implementations of this application bring at least the following beneficial effects:

The ingress device determines, from the received service packet, the service packet belonging to the target service flow, obtains the transmission quality information of the target service flow based on the detection packet belonging to the target service flow, and reports the flow identifier of the target service flow and the transmission quality information of the target service flow to the controller. The controller determines the transmission quality of the target service flow based on the flow identifier of the target service flow and the transmission quality information of the target service flow. The detection packet includes the at least one service packet belonging to the target service flow, and the service packet belonging to the target service flow meets the any one or the combination of the plurality of the following conditions: the service packet is transmitted through the target transmission network, the service packet is transmitted on the target transmission path, the service packet is received through the target port of the ingress device, the service packet is transmitted through the egress device, and the service packet has the target priority. It can be learned that the target service flow includes the service packet that meets the any one or the combination of the plurality of the foregoing conditions, and usually includes the plurality of service flows identified by the 5-tuple information. Therefore, in the technical solutions provided in implementations of this application, the transmission quality of the plurality of service flows identified by the 5-tuple information may be simultaneously detected, and the plurality of service flows identified by the 5-tuple information may be considered as one service flow group. Detecting the transmission quality of the target service flow is also detecting the transmission quality of the service flow group. In implementations of this application, the transmission quality may be detected at the granularity of the service flow group. In the detection process, the network devices are under little statistics collection pressure and reporting pressure, and the controller is under little processing pressure. The technical solution is applicable to the large-scale transmission quality detection scenario.

### BRIEF DESCRIPTION OF DRAWINGS

FIG. 1 is a schematic diagram of an implementation environment according to an implementation of this application;
FIG. 2A and FIG. 2B are a flowchart of a transmission quality detection method according to an implementation of this application;
FIG. 3 is a schematic diagram of an IFIT detection packet according to an implementation of this application;
FIG. 4 is a schematic diagram of a logical structure of a transmission quality detection apparatus according to an implementation of this application;
FIG. 5 is a schematic diagram of another logical structure of a transmission quality detection apparatus according to an implementation of this application;
FIG. 6 is a schematic diagram of a logical structure of a transmission quality detection apparatus according to an implementation of this application;
FIG. 7 is a schematic diagram of another logical structure of a transmission quality detection apparatus according to an implementation of this application;
FIG. 8 is a schematic diagram of a hardware structure of a transmission quality detection apparatus according to an implementation of this application; and
FIG. 9 is a schematic diagram of a transmission quality detection system according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

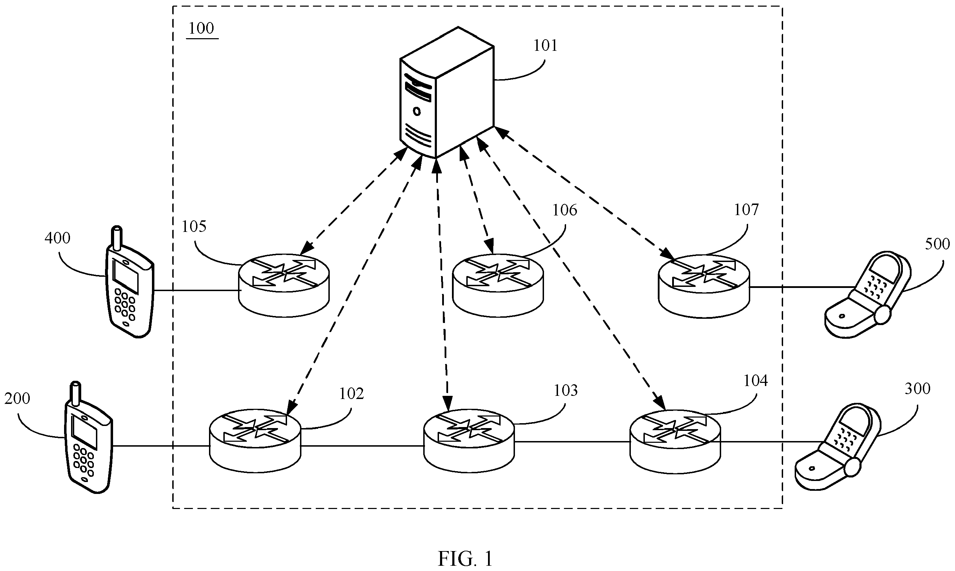

FIG. 1 is a schematic diagram of an implementation environment according to an implementation of this application. Refer to FIG. 1. The implementation environment includes a communication network 100 and at least two user devices in communication connection with the communication network 100. Any two of the at least two user devices may transmit a service packet through the communication network 100. For example, this implementation of this application is described by using an example in which the at least two user devices include user devices 200 to 500 (namely, the user device 200, the user device 300, the user device 400, and the user device 500) and the user device 200 transmits a service packet to the user device 300 through the communication network 100, in other words, by using an example in which the user device 200 is a sending device and the user device 300 is a receiving device.

As shown in FIG. 1, the communication network 100 includes a controller 101 and a plurality of network devices in communication connection with the controller 101. The network device is configured to forward a service packet under control of the controller 101. In addition, based on a flow direction and a transmission path of the service packet, the plurality of network devices may include an ingress device, an egress device, and at least one transit device located between the ingress device and the egress device. It is easy to understand that, based on a length of the transmission path, the plurality of network devices may alternatively include only an ingress device and an egress device but no transit device. For example, this implementation of this application is described by using an example in which the plurality of network devices include network devices 102 to 107 (namely, the network device 102, the network device 103, the network device 104, the network device 105, the network device 106, and the network device 107), the user device 200 is in communication connection with the network device 102 in the communication network 100, and the user device 300 is in communication connection with the network device 104 in the communication network 100. It is easy to understand that in the example in which the user device 200 transmits the service packet to the user device 300 through the communication network 100, the network device 102 may be the ingress device, and the network device 104 may be the egress device. The network device is also referred to as a network node, a gateway device, a routing node, a routing device, or the like. The ingress device is also referred to as an ingress node, the egress device is also referred to as an egress node, and the transit device is also referred to as a transit node.

The controller 101 is the brain of a future cloud-based network, integrates functions such as network management, service control, and network analysis, and is a core enabling system for implementing network resource pooling, network connection automation and self-optimization, and operation & maintenance automation. The controller 101 may be a functional module deployed in a server, a server, a server cluster including several servers, or a cloud computing service center. This is not limited in this implementation of this application. The server is a device providing a computing service. The server needs to respond to and process a service request to provide a reliable service. Therefore, generally, the server needs to be capable of undertaking and ensuring the service, and needs to have a strong processing capability, high stability, high reliability, high security, scalability, and manageability. In implementations of this application, the server may be an x86-based server. The x86-based server is also referred to as a complex instruction set computer (complex instruction set computer, CISC) architecture-based server, commonly referred to as a personal computer (personal computer, PC) server, and is a server that uses an Intel (Intel) processor chip or another x86 instruction set-compatible processor chip and a Windows operating system based on a PC architecture.

Each of the network devices 102 to 107 may be a device for forwarding a service packet in the communication network, for example, a switch or a router (router). The network devices 102 to 107 may be same network devices, for example, may all be routers. Alternatively, the network devices 102 to 107 may be different network devices. For example, a part of the network devices 102 to 107 are routers, and the other part are switches. The router is a hardware device connecting two or more communication networks, and functions as a gateway between the communication networks. The router is a dedicated and intelligent network device that can read a destination address in the service packet and determine how to transmit the service packet based on the destination address. The router can understand different protocols such as an Ethernet protocol used in a specific local area network or a Transmission Control Protocol/Internet Protocol (Transmission Control Protocol/Internet Protocol, TCP/IP) used in the Internet. In this way, the router may analyze destination addresses in service packets transmitted from different types of networks, convert a non-TCP/IP address into a TCP/IP address or convert a TCP/IP address into a non-TCP/IP address, and then transmit each service packet to the destination address along an optimal transmission path according to a selected routing algorithm. Therefore, the router can connect a non-TCP/IP network to the Internet. It should be noted that, to distinguish between a communication connection and the transmission path of the service packet, FIG. 1 uses a dashed line to show a communication connection between the controller 101 and each network device. In addition, in some scenarios, the transmission path described in implementations of this application may also be referred to as a communication link, a communication path, a communication tunnel, a tunnel path, or the like.

Each of the user devices 200 to 500 may be a communication device having a wireless communication function. For example, each of the user devices 200 to 500 may be a smartphone, a tablet computer, a desktop computer, or an Internet of things (Internet of things, IoT) device. In addition, the user devices 200 to 500 may be same communication devices, for example, may all be smartphones. Alternatively, the user devices 200 to 500 may be different communication devices. For example, a part of the user devices 200 to 500 are smartphones, and the other part are IoT devices. The IoT device may be a household appliance, a smart household, a vehicle, a tool device, a service device, a service facility, a wearable device, or the like. For example, the IoT device is, but is not limited to, a smart refrigerator, a smart washing machine, a smart water meter, a smart meter, a smart car, a vehicle-mounted device, or a wearable device.

It should be noted that the communication network 100 in the implementation environment shown in FIG. 1 is merely used as an example, and is not intended to limit the technical solutions in implementations of this application. In a specific implementation process, the communication network may further include another device, and a quantity of network devices may be configured as required. In addition, a person skilled in the art should understand that the foregoing definitions of the ingress device and the egress device are merely examples. During actual application, the ingress device may be a network device that starts traffic monitoring, and the egress device may be a network device that ends the traffic monitoring. For a service flow (a service flow identified by 5-tuple information) and/or a service flow group (the service flow group includes a plurality of service flows identified by 5-tuple information), the ingress device is a network device that starts transmission quality detection of the service flow and/or the service flow group, and the egress device is a network device that ends the transmission quality detection of the service flow and/or the service flow group.

It is easy to understand that any network device in the communication network 100 may be used as the ingress device and/or the egress device. This is not limited in this implementation of this application.

To ensure transmission reliability of a service flow, currently, an IFIT technology is used to detect transmission quality of the service flow. A detection principle of the IFIT technology is as follows: An IFIT extension header is inserted into a service packet, and transmission quality of a service flow to which the service packet belongs is detected based on the IFIT extension header in the service packet. Usually, the IFIT extension header carries only basic field information, to ensure that the IFIT extension header causes minimal packet expansion to the service packet. In the IFIT technology, using the example in which the user device 200 transmits the service packet to the user device 300 through the communication network 100 in the implementation environment shown in FIG. 1, the controller 101 delivers 5-tuple information of a to-be-detected service flow to the ingress device 102; after receiving the service packet sent by the user device 200, the ingress device 102 detects whether 5-tuple information of the service packet matches the 5-tuple information that is of the to-be-detected service flow and that is delivered by the controller 101; if the 5-tuple information of the service packet matches the 5-tuple information that is of the to-be-detected service flow and that is delivered by the controller 101, the ingress device 102 may generate a FlowID for a service flow to which the service packet belongs, insert an IFIT extension header into the service packet, and record the FlowID in the IFIT extension header to obtain an IFIT service packet; then, the ingress device 102 forwards the IFIT service packet to the transit device 103; the transit device 103 forwards the IFIT service packet to the egress device 104; the egress device 104 strips the IFIT extension header from the IFIT service packet to obtain the original service packet, and sends the original service packet to the user device 300. In the foregoing process, each network device among the ingress device 102, the transit device 103, and the egress device 104 may collect statistics about transmission quality information of the service flow based on the FlowID, and report the FlowID of the service flow and the transmission quality information of the service flow to the controller 101. The controller 101 determines transmission quality of the service flow based on the FlowID of the service flow and the transmission quality information of the service flow that are reported by the network device. The 5-tuple information includes a source IP address, a destination IP address, a source port, a destination port, and a protocol number.

However, because in the current IFIT technology, transmission quality is detected at a granularity of a service flow identified by 5-tuple information, in a detection process, the network devices are under great statistics collection pressure and reporting pressure, and the controller 101 is under great processing pressure. Consequently, the statistics collection pressure and the reporting pressure of the network devices and the processing pressure of the controller exponentially increase in a large-scale transmission quality detection scenario, and large-scale deployment is very difficult. Therefore, the current IFIT technology is difficult to be applied to the large-scale transmission quality detection scenario.

In the technical solutions provided in implementations of this application, transmission quality is detected at a granularity of a target service flow based on the IFIT technology. A service packet belonging to the target service flow meets any one or a combination of a plurality of the following conditions: the service packet is transmitted through a target transmission network, the service packet is transmitted on a target transmission path, the service packet is received through a target port of an ingress device, the service packet is transmitted through an egress device, and the service packet has a target priority. It can be learned that the target service flow includes the service packet that meets the any one or the combination of the plurality of the foregoing conditions, and usually includes a plurality of service flows identified by 5-tuple information. For example, if both a service flow 1 identified by 5-tuple information 1 and a service flow 2 identified by 5-tuple information 2 are transmitted on a transmission path A, the service flow 1 and the service flow 2 are integrally used as a target service flow. Further, in the technical solutions provided in implementations of this application, transmission quality of the plurality of service flows identified by the 5-tuple information may be simultaneously detected, and the plurality of service flows identified by the 5-tuple information (where the plurality of service flows identified by the 5-tuple information are integrally the target service flow) may be considered as one service flow group. Detecting the transmission quality at the granularity of the target service flow means detecting the transmission quality at a granularity of the service flow group. In a detection process, the network devices are under little statistics collection pressure and reporting pressure, and the controller 101 is under little processing pressure. The technical solutions are applicable to large-scale transmission quality detection scenarios such as a full-service end-to-end (end-to-end, E2E) transmission quality detection scenario, a scenario in which a large quantity of services are affected and transmission quality needs to be detected, and a large-scale networking scenario in which transmission quality detection needs to be focused on. The term "a plurality of" means two or more. It is easy to understand that the target service flow in implementations of this application may alternatively include one service flow identified by 5-tuple information. This is not limited in implementations of this application. For detailed solutions of this application, refer to description in the following implementations.

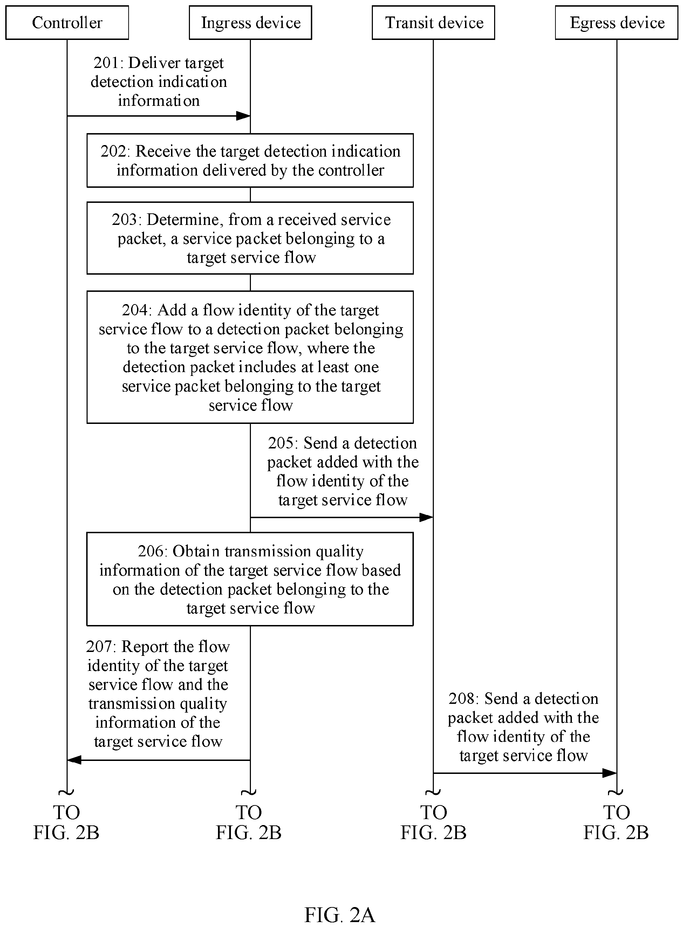

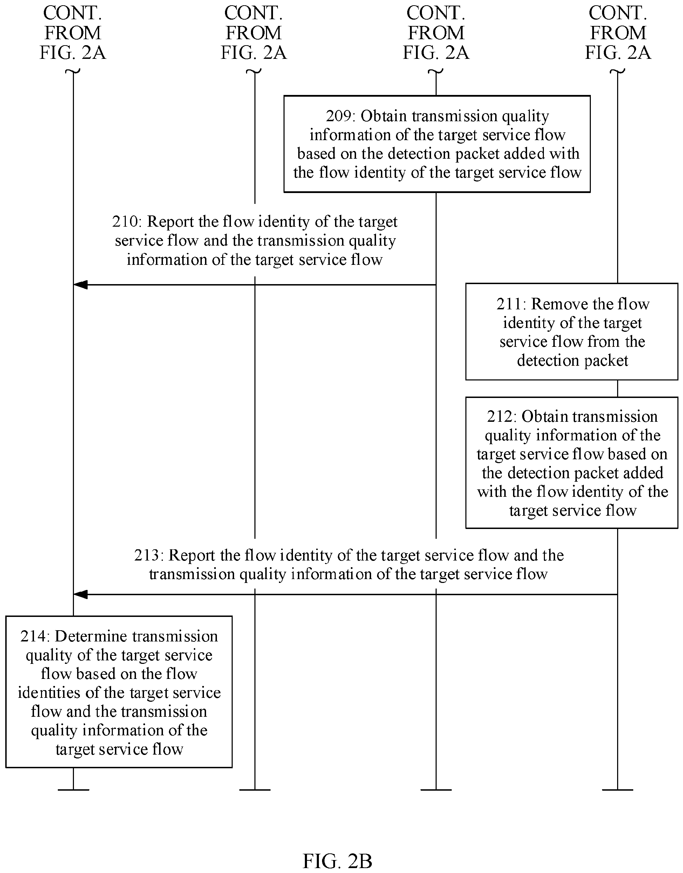

FIG. 2A and FIG. 2B are a flowchart of a transmission quality detection method according to an implementation of this application. The transmission quality detection method may be applied to a communication network. The communication network may include a controller and a plurality of network devices, and the plurality of network devices include an ingress device and an egress device. In addition, the plurality of network devices may further include at least one transit device located between the ingress device and the egress device. Refer to FIG. 2A and FIG. 2B. The method may include the following steps.

Step 201: The controller delivers target detection indication information to the ingress device.

Optionally, for each ingress device in the communication network, a user may configure target detection indication information on the controller. After receiving the target detection indication information configured by the user, the controller delivers the target detection indication information to the corresponding ingress device. In this implementation of this application, the controller may have a setting interface. The setting interface may include an information input control. The user may input the target detection indication information to the controller in the setting interface by using the information input control, to configure the target detection indication information on the controller. The target detection indication information indicates a target service flow, and the target service flow may include at least one service flow identified by 5-tuple information or 2-tuple information. The at least one service flow identified by the 5-tuple information or the 2-tuple information may be one service flow identified by the 5-tuple information or the 2-tuple information, or may be a plurality of (two or more) service flows identified by the 5-tuple information or the 2-tuple information. In addition, usually, the target service flow includes a plurality of service flows identified by the 5-tuple information or the 2-tuple information. The term "a plurality of" means two or more. The 5-tuple information includes a source IP address, a destination IP address, a source port, a destination port, and a protocol number. The 2-tuple information includes a source IP address and a destination IP address.

Optionally, the target detection indication information may include any one or a combination of a plurality of the following: an identifier of a target transmission network for transmitting the target service flow, an identifier of a target transmission path for transmitting the target service flow, an identifier of a target port that is on the ingress device and that is for receiving the target service flow, an identifier of the egress device for transmitting the target service flow, and a priority of the target service flow. In the target detection indication information provided in this implementation of this application, the identifier of the target transmission network may indicate a service flow transmitted through the target transmission network, the identifier of the target transmission path may indicate a service flow transmitted on the target transmission path, the identifier of the target port may indicate a service flow received through the target port on the ingress device, the identifier of the egress device may indicate a service flow transmitted through the egress device, and the priority may indicate a service flow with the priority. The service flow transmitted through the target transmission network, the service flow transmitted on the target transmission path, the service flow received through the target port on the ingress device, the service flow transmitted through the egress device, and the service flow with the priority may all be target service flows.

Optionally, the identifier of the target transmission network may include a VPN identifier, for example, a VPN segment identifier (segment identifier, SID). The identifier of the target transmission path may include a tunnel (tunnel) identifier, for example, a VPN tunnel identifier or a segment routing over IPv6 (Segment Routing over IPv6, SRv6) policy (policy). SRv6 is a network forwarding technology applicable to the Internet Protocol version 6 (Internet Protocol version 6, IPv6), where SR is also referred to as segment routing. The identifier of the target port may include a port number of the target port. The identifier of the egress device may include any one of locator (locator) information of the egress device, an IP address of the egress device, and a MAC address of the egress device. For example, the identifier of the egress device may be a decapsulation and specific IPv4 table lookup (decapsulation and specific IPv4 table lookup, DT4) SID of the egress device or a loopback (loopback) interface address of the egress device. The priority may include any one of a DSCP priority, a TOS priority, and an 802.1p priority.

Optionally, in this implementation of this application, the target detection indication information may be the identifier of the target transmission path for transmitting the target service flow, the identifier of the egress device for transmitting the target service flow, a combination of the identifier of the target transmission network for transmitting the target service flow and the identifier of the target transmission path for transmitting the target service flow, or a combination of the identifier of the target transmission network for transmitting the target service flow and the identifier of the egress device for transmitting the target service flow. For example, the target detection indication information may be an identifier of a tunnel (a transmission path) for transmitting the target service flow, the DT4 SID of the egress device (an identifier of the egress device) for transmitting the target service flow, the loopback interface address of the egress device (an identifier of the egress device) for transmitting the target service flow, a combination of an identifier of a VPN for transmitting the target service flow and an identifier of a tunnel for transmitting the target service flow (the combination of the identifier of the target transmission network for transmitting the target service flow and the identifier of the target transmission path for transmitting the target service flow), a combination of an identifier of a VPN for transmitting the target service flow and the locator information of the egress device for transmitting the target service flow (the combination of the identifier of the target transmission network for transmitting the target service flow and the identifier of the egress device for transmitting the target service flow), a combination of an identifier of a VPN for transmitting the target service flow and the DT4 SID of the egress device for transmitting the target service flow (the combination of the identifier of the target transmission network for transmitting the target service flow and the identifier of the egress device for transmitting the target service flow), or a combination of an identifier of a VPN for transmitting the target service flow and the loopback interface address of the egress device for transmitting the target service flow (the combination of the identifier of the target transmission network for transmitting the target service flow and the identifier of the egress device for transmitting the target service flow). For example, in an SRv6 scenario, the target detection indication information delivered by the controller to the ingress device may be the combination of the identifier of the VPN for transmitting the target service flow and the locator information of the egress device for transmitting the target service flow or the combination of the identifier of the VPN for transmitting the target service flow and the DT4 SID of the egress device for transmitting the target service flow. In tunnel scenarios such as a segment routing traffic engineering (segment routing traffic engineering, SR-TE) scenario, a scenario using a segment routing policy (segment routing Policy, SR Policy), a scenario using the SRv6 policy, and a resource reservation protocol-traffic engineering (resource reservation protocol-traffic engineering, RSVP-TE) scenario, the target detection indication information delivered by the controller to the ingress device may be the combination of the identifier of the VPN for transmitting the target service flow and the loopback interface address of the egress device for transmitting the target service flow. In a segment routing (segment routing, SR) scenario or a multi-protocol label switching (multi-protocol label switching, MPLS) scenario, the target detection indication information delivered by the controller to the ingress device may be the combination of the identifier of the VPN for transmitting the target service flow and the identifier of the tunnel for transmitting the target service flow, or may include only the identifier of the tunnel for transmitting the target service flow. This is not limited in this implementation of this application.

It should be noted that the target detection indication information and specific content thereof that are described in this implementation of this application are merely examples. A person skilled in the art should understand that, during actual application, the target detection indication information may further include other content. In addition, it is easy to understand that the target detection indication information is used by the ingress device to sift out the target service flow. Therefore, in some scenarios, the target detection indication information may also be referred to as a filtering condition or a sifting condition, and the ingress device sifts out, based on the filtering condition, a target service flow that meets the filtering condition, and monitors the target service flow. A representation manner is not limited, provided that the ingress device can sift out the target service flow based on the information delivered by the controller. This is not limited in this implementation of this application.

Step 202: The ingress device receives the target detection indication information delivered by the controller.

The controller delivers the target detection indication information to the ingress device. Correspondingly, the ingress device may receive the target detection indication information delivered by the controller. Then, the ingress device may configure the target detection indication information on the ingress device. The target detection indication information may indicate the target service flow, and the target service flow may include the at least one service flow identified by the 5-tuple information or the 2-tuple information. For content of the target detection indication information and the target service flow, refer to step 201. Details are not described herein again in this implementation of this application.

Step 203: The ingress device determines, from a received service packet, a service packet belonging to the target service flow.

The ingress device may receive the service packet, and determine, from the received service packet, the service packet belonging to the target service flow. The service packet belonging to the target service flow meets any one or a combination of a plurality of the following conditions: the service packet is transmitted through the target transmission network, the service packet is transmitted on the target transmission path, the service packet is received through the target port of the ingress device, the service packet is transmitted through the egress device, and the service packet has a target priority. Optionally, the service packet belonging to the target service flow may alternatively meet the following condition: the service packet is sent through the target port of the ingress device. This is not limited in this implementation of this application.

Optionally, the ingress device may determine, from the received service packet based on the target detection indication information configured on the ingress device, the service packet belonging to the target service flow. For the received service packet, the ingress device may detect whether packet transmission information of the service packet matches the target detection indication information configured on the ingress device. If the packet transmission information of the service packet matches the target detection indication information configured on the ingress device, the ingress device determines that the service packet belongs to the target service flow; or if the packet transmission information of the service packet does not match the target detection indication information configured on the ingress device, the ingress device determines that the service packet does not belong to the target service flow. Optionally, the ingress device may compare the packet transmission information of the service packet with the target detection indication information configured on the ingress device, to detect whether the packet transmission information of the service packet matches the target detection indication information configured on the ingress device.

Optionally, for each service packet, the packet transmission information may include any one or a combination of a plurality of the following: an identifier of a transmission network for transmitting the service packet, an identifier of a transmission path for transmitting the service packet, an identifier of a port that is on the ingress device and that is for receiving the service packet, the identifier of the egress device for transmitting the service packet, and a priority of the service packet. In the packet transmission information of the service packet provided in this implementation of this application, the identifier of the transmission network may indicate that the service packet is transmitted through the transmission network, the identifier of the transmission path may indicate that the service packet is transmitted on the transmission path, the identifier of the port may indicate that the service packet is transmitted through the port on the ingress device, and the identifier of the egress device may indicate that the service packet is transmitted through the egress device. Optionally, the identifier of the transmission network may include a VPN identifier. The identifier of the transmission path may include a tunnel identifier. The identifier of the port may be a port number. The identifier of the egress device may include any one of the locator information of the egress device, the IP address of the egress device, and the MAC address of the egress device. The priority may include any one of a DSCP priority, a TOS priority, and an 802.1p priority.

Optionally, in this implementation of this application, the packet transmission information may be carried in the service packet, or may be determined by the ingress device based on a transmission status of the service packet. When the packet transmission information is carried in the service packet, the service packet may include a transmission information field, and the packet transmission information may be located in the transmission information field. In other words, a parameter value in the transmission information field is the packet transmission information. For example, the service packet may include a DSCP field. The DSCP priority may be located in the DSCP field, and the ingress device may read the packet transmission information of the service packet from the transmission information field of the service packet. When the packet transmission information is determined by the ingress device based on the transmission status of the service packet, the ingress device may determine the packet transmission information of the service packet based on the port that is on the ingress device and that is for receiving the service packet. For example, if all service packets received by the ingress device through a port 1 are to be transmitted through a VPN 1, the ingress device determines that packet transmission information of the service packets received through the port 1 is an identifier of the VPN 1. This is not limited in this implementation of this application.

A person skilled in the art should understand that a plurality of different types of target detection indication information may be configured on the ingress device. That the ingress device detects whether packet transmission information of the service packet matches the target detection indication information configured on the ingress device may be: The ingress device detects whether the packet transmission information of the service packet matches any type of target detection indication information configured on the ingress device. If the packet transmission information of the service packet matches at least one of the plurality of different types of target detection indication information in the ingress device, the ingress device determines that the packet transmission information of the service packet matches the target detection indication information configured on the ingress device.

It should be noted that this implementation of this application is described by using an example in which the user configures the target detection indication information on the controller and the controller delivers the target detection indication information to the ingress device. During actual application, the user may directly configure the target detection indication information on the ingress device. This is not limited in this implementation of this application.

Step 204: The ingress device adds a flow identifier of the target service flow to a detection packet belonging to the target service flow, where the detection packet includes at least one service packet belonging to the target service flow.

The detection packet may be any service packet belonging to the target service flow, may be several service packets belonging to the target service flow, or may be all service packets belonging to the target service flow. For example, for a packet loss detection scenario, in each detection period, all received service packets belonging to the target service flow may be used as detection packets. For a delay detection scenario, in each detection period, one received service packet belonging to the target service flow may be used as a detection packet. For example, the first service packet that belongs to the target service flow and that is received in each detection period may be used as the detection packet. This is not limited in this implementation of this application.

Optionally, the ingress device may insert a detection extension header into the detection packet, and then record the flow identifier of the target service flow in the detection extension header, so that the detection extension header includes the flow identifier of the target service flow, and therefore the flow identifier of the target service flow is added to the detection packet. A detection packet with the detection extension header may be referred to as an extended detection packet. The detection extension header may be an IFIT extension header. Correspondingly, the extended detection packet may be an IFIT detection packet.

Optionally, the detection extension header may include a first field. After inserting the detection extension header into the detection packet, the ingress device may further set a value of the first field in the detection extension header to a preset value (for example, 255). In a packet transmission process, the value of the first field may change according to a preset rule, that is, each network device that receives the detection packet updates the value of the first field according to the preset rule. The preset rule may be that the value decreases or increases progressively. For example, the first field is a time to live (time to live, TTL) field. Correspondingly, the preset rule is that the value decreases by 1 hop by hop.

This implementation of this application is described by using an example in which the extended detection packet is the IFIT detection packet. In different scenarios, the IFIT detection packet usually has different structures. The following describes the IFIT detection packet used in the MPLS scenario.

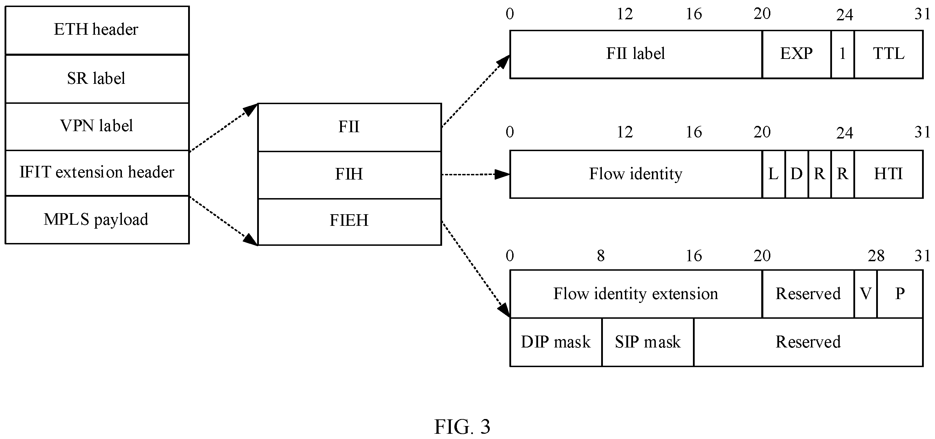

For example, FIG. 3 is a schematic diagram of an IFIT detection packet according to an implementation of this application. The IFIT detection packet may be an IFIT detection packet used in the MPLS scenario. As shown in FIG. 3, the IFIT detection packet includes an MPLS payload (payload), an IFIT extension header, a VPN label, an SR label, and an Ethernet (Ethernet, ETH) header. The IFIT extension header may be a detection extension header inserted by the ingress device between the MPLS payload and the VPN label of the detection packet. The IFIT extension header includes a flow instruction extension header (flow instruction extension header, FIEH), a flow instruction header (flow instruction header, FIH), and a flow instruction indicator (flow instruction indicator, FII). The FIEH is an optional part of the IFIT extension header, and includes a flow identifier extension field (occupying 20 bits), a reverse flow learning enabling flag field (reserved, including a V field and a reserved field, and occupying eight bits in total), a detection period (Period, P) field (occupying three bits), a destination Internet Protocol (destination Internet Protocol, DIP) mask (mask) field (reserved, and occupying eight bits), and a source Internet Protocol (Source Internet Protocol, SIP) mask field (reserved, and occupying eight bits). A parameter value of the P field indicates duration of the detection period, and may be 0, 1, 2, 3, 4, or 5. 0 indicates that the P field is reserved, 1 indicates that the detection period is 1 second, 2 indicates that the detection period is 10 seconds, 3 indicates that the detection period is 30 seconds, 4 indicates that the detection period is 60 seconds, and 5 indicates that the detection period is 300 seconds. The FIH includes a flow identifier field (occupying 20 bits), an L (packet loss measurement flag) field, a D (delay measurement flag) field, and a header type indicator (header type indicator, HTI) field (occupying eight bits). A parameter value of the HTI field indicates an FIH header type, and may be 0, 1, 2, 3, or 4. 0 indicates that the HTI field is reserved, 1 indicates that the FIH is an E2E FIH, 2 indicates that the FIH is a basic hop-by-hop FIH, 3 indicates that the FIH is an extended E2E FIH (the FIEH is valid), and 4 indicates that the FIH is an extended hop-by-hop FIH (the FIEH is valid). The L field is also referred to as a packet loss flag field or a packet loss flag bit, and the D field is also referred to as a delay flag field or a delay flag bit. The FII includes an FII label field, an experimental bits (experimental bits, EXP) field, and a TTL field. The FII label field indicates a reserved label, the FII label is at a stack bottom, and a parameter value of the FII label field may be 12 and indicates a subsequent content in the IFIT extension header.

It should be noted that the IFIT detection packet described in this implementation of this application is merely an example, and is mainly used to describe a location of the IFIT extension header in the IFIT detection packet and content of the IFIT extension header. During actual application, a structure of the IFIT detection packet is not limited to the structure shown in FIG. 3. The IFIT detection packet is not limited in this implementation of this application.

It should be further noted that, in this implementation of this application, the flow identifier of the target service flow is an identifier that can uniquely identify the target service flow, and may be a sequence number or a number of the target service flow. Usually, the ingress device may record the flow identifier of the target service flow. When performing step 204, the ingress device may only need to add the flow identifier of the target service flow to the detection packet belonging to the target service flow. However, when the ingress device receives the first service packet belonging to the target service flow, the flow identifier of the target service flow may not exist in the ingress device. Therefore, after determining that packet transmission information of the service packet matches the target detection indication information configured on the ingress device (that is, determining that the first service packet belonging to the target service flow is received), the ingress device may generate the flow identifier for the target service flow to which the service packet belongs. Optionally, the ingress device may allocate the sequence number to the target service flow to which the service packet belongs, and use the sequence number of the target service flow as the flow identifier of the target service flow to which the service packet belongs. Alternatively, the ingress device may generate, based on the packet transmission information of the service packet, the flow identifier for the target service flow to which the service packet belongs, where the flow identifier includes the packet transmission information of the service packet. Alternatively, the ingress device may generate, based on the target detection indication information that matches the packet transmission information of the service packet, the flow identifier for the target service flow to which the service packet belongs, where the flow identifier includes the target detection indication information that matches the packet transmission information of the service packet. Certainly, the ingress device may alternatively generate, in another manner, the flow identifier for the target service flow to which the service packet belongs. A manner in which the ingress device generates the flow identifier is not limited in this implementation of this application, provided that the ingress device can determine the flow identifier that uniquely identifies the target service flow.

Step 205: The ingress device sends, to the transit device, a detection packet added with the flow identifier of the target service flow.

After adding the flow identifier of the target service flow to the detection packet belonging to the target service flow, the ingress device may send, to the transit device adjacent to the ingress device, the detection packet added with the flow identifier of the target service flow. For example, the ingress device sends the extended detection packet to the transit device, where the extended detection packet includes the detection extension header, and the detection extension header includes the flow identifier of the target service flow. As described above, the detection extension header may include the first field. In the packet transmission process, the value of the first field may change according to the preset rule, that is, each network device that receives the detection packet updates the value of the first field according to the preset rule. The preset rule may be that the value decreases or increases progressively. For example, the first field is the TTL field. Correspondingly, the preset rule is that the value decreases by 1 hop by hop. In this implementation of this application, the detection extension header may be the IFIT extension header. Correspondingly, the extended detection packet may be the IFIT detection packet. For the structure of the IFIT detection packet, refer to the description in FIG. 3 and step 205. Details are not described herein again in this implementation of this application.

Step 206: The ingress device obtains transmission quality information of the target service flow based on the detection packet belonging to the target service flow.

After determining the service packet belonging to the target service flow, the ingress device may obtain the transmission quality information of the target service flow based on the detection packet of the target service flow.

Optionally, the ingress device may periodically collect statistics about the transmission quality information of the target service flow based on the flow identifier of the target service flow in a process of forwarding the detection packet (receiving the detection packet and sending, to the transit device, the detection packet added with the flow identifier of the target service flow), to obtain the transmission quality information of the target service flow. Transmission quality may be SLA quality, for example, a packet loss amount or a transmission delay. Correspondingly, the transmission quality information is SLA information. For the ingress device, the transmission quality information may include any one or more of a quantity of detection packets received by the ingress device in each detection period, a quantity of detection packets sent by the ingress device in each detection period, a receiving timestamp of receiving the detection packet, and a sending timestamp of sending the detection packet.

In this implementation of this application, the detection packet is a service packet that can be used to detect the transmission quality. The detection packet may be any service packet belonging to the target service flow, may be several service packets belonging to the target service flow, or may be all the service packets belonging to the target service flow. This is not limited in this implementation of this application. Optionally, when adding the flow identifier of the target service flow to the detection packet, the ingress device may further set the delay flag bit in the detection packet to detect the transmission delay, and set the packet loss flag bit in the detection packet to detect the packet loss amount. For example, when inserting the detection extension header into the detection packet, the ingress device sets the delay flag bit and/or the packet loss flag bit in the detection extension header. It is easy to understand that the ingress device may set both the delay flag bit and the packet loss flag bit in a same detection packet; or may set the delay flag bit in some detection packets, and set the packet loss flag bit in some other detection packets. This is not limited in this implementation of this application.

Optionally, in each detection period, for any detection packet belonging to the target service flow, the ingress device may set the delay flag bit and/or the packet loss flag bit in the detection packet. For a detection packet in which the delay flag bit is set, the ingress device collects statistics about a receiving timestamp of receiving the detection packet by the ingress device. For a detection packet in which the packet loss flag bit is set, the ingress device collects statistics about a quantity of detection packets received by the ingress device. In addition, during sending of the detection packet (where the detection packet is the detection packet added with the flow identifier of the target service flow), for a detection packet in which the delay flag bit is set, the ingress device collects statistics about a sending timestamp of sending the detection packet by the ingress device; for a detection packet in which the packet loss flag bit is set, the ingress device collects statistics about a quantity of detection packets sent by the ingress device.

It should be noted that, in each detection period, the ingress device may set the delay flag bit in one detection packet, and set the packet loss flag bit in a plurality of detection packets, for example, set the packet loss flag bit in all the detection packets. This is not limited in this implementation of this application. Certainly, the ingress device may alternatively set the delay flag bit in a plurality of detection packets. This is not limited in this implementation of this application.

Step 207: The ingress device reports the flow identifier of the target service flow and the transmission quality information of the target service flow to the controller.

After obtaining the transmission quality information of the target service flow, the ingress device may report the flow identifier of the target service flow and the transmission quality information of the target service flow to the controller. The ingress device periodically obtains the transmission quality information of the target service flow. Correspondingly, the ingress device may periodically report the flow identifier of the target service flow and the transmission quality information of the target service flow to the controller. As described above, the detection packet may include the detection extension header, and the detection extension header may include the first field. In this implementation of this application, the ingress device may further report the value of the first field to the controller.

Optionally, the ingress device may report, to the controller at a fixed moment in each detection period, the flow identifier of the target service flow and transmission quality information that is of the target service flow and that is obtained by the ingress device in the detection period. The fixed moment is, for example, an end moment of each detection period. For the ingress device, the transmission quality information may include the any one or more of the quantity of detection packets received by the ingress device in each detection period, the quantity of detection packets sent by the ingress device in each detection period, the receiving timestamp of receiving the detection packet, and the sending timestamp of sending the detection packet. It is easy for a person skilled in the art to understand that, when reporting the flow identifier of the target service flow and the transmission quality information of the target service flow to the controller in each detection period, the ingress device may simultaneously report a detection period identifier (for example, a period number) and an identifier of the ingress device, so that the controller distinguishes between transmission quality information of target service flows that is reported by different ingress devices in different detection periods. This is not limited in this implementation of this application.

It should be noted that, in each detection period, the ingress device may set the delay flag bit in one detection packet. In this way, in each detection period, the ingress node only needs to report a receiving timestamp and a sending timestamp of the detection packet to the controller, so that the controller determines the transmission delay of the target service flow. Alternatively, in each detection period, the ingress device may set the delay flag bit in a plurality of detection packets. The ingress device may report an average value of receiving timestamps of the plurality of detection packets and an average value of sending timestamps of the plurality of detection packets to the controller. The controller may determine the transmission delay of the target service flow based on the average value of the receiving timestamps and the average value of the sending timestamps. This is not limited in this implementation of this application.

Step 208: The transit device sends, to the egress device, a detection packet added with the flow identifier of the target service flow.

The ingress device sends, to the transit device, the detection packet added with the flow identifier of the target service flow. Correspondingly, the transit device may receive the detection packet that is added with the flow identifier of the target service flow and that is sent by the ingress device. Then, the transit device may send, to the egress device, the detection packet added with the flow identifier of the target service flow. For example, the transit device receives the extended detection packet sent by the ingress device, and sends the extended detection packet to the egress device, where the extended detection packet includes the detection extension header, and the detection extension header includes the flow identifier of the target service flow. As described above, the detection extension header may include the first field. In the packet transmission process, the value of the first field may change according to the preset rule, that is, each network device that receives the detection packet updates the value of the first field according to the preset rule. The preset rule may be that the value decreases or increases progressively. For example, the first field is the TTL field. Correspondingly, the preset rule is that the value decreases by 1 hop by hop.

Step 209: The transit device obtains transmission quality information of the target service flow based on the detection packet added with the flow identifier of the target service flow.

The ingress device sends, to the transit device, the detection packet added with the flow identifier of the target service flow. Correspondingly, the transit device may receive the detection packet that is added with the flow identifier of the target service flow and that is sent by the ingress device. Then, the transit device may obtain the transmission quality information of the target service flow based on the detection packet added with the flow identifier of the target service flow.

Optionally, the transit device may collect statistics about the transmission quality information of the target service flow based on the flow identifier that is of the target service flow and that is in the detection packet in a process of forwarding the detection packet added with the flow identifier of the target service flow, to obtain the transmission quality information of the target service flow. Optionally, the detection packet added with the flow identifier of the target service flow may be the extended detection packet. For each received service packet, the transit device may detect whether the service packet includes the detection extension header. If the service packet includes the detection extension header, the transit device determines that the service packet is the extended detection packet, reads the flow identifier of the target service flow in the extended detection packet, and collects statistics about the transmission quality information of the target service flow based on the flow identifier of the target service flow.

Optionally, the transit device may periodically collect statistics about the transmission quality information of the target service flow based on the flow identifier of the target service flow. The transmission quality may be the SLA quality, for example, the packet loss amount or the transmission delay. Correspondingly, the transmission quality information is the SLA information. For the transit device, the transmission quality information may include any one or more of a quantity of detection packets received by the transit device in each detection period, a quantity of detection packets sent by the transit device in each detection period, a receiving timestamp of receiving the detection packet, and a sending timestamp of sending the detection packet. In this implementation of this application, the detection packet is the service packet that can be used to detect the transmission quality. For the transit device, the delay flag bit and/or the packet loss flag bit may be set in the detection packet. For example, the detection packet may be the extended detection packet, the extended detection packet includes the detection extension header, and the delay flag bit and/or the packet loss flag bit are/is set in the detection extension header.

Optionally, in each detection period, for each received detection packet, the transit device may parse the detection packet to determine whether the delay flag bit and/or the packet loss flag bit are/is set in the detection packet. If the delay flag bit and/or the packet loss flag bit are/is set in the detection packet, for a detection packet in which the delay flag bit is set, the transit device collects statistics about a receiving timestamp of receiving the detection packet by the transit device; for a detection packet in which the packet loss flag bit is set, the transit device collects statistics about a quantity of detection packets received by the transit device. During sending of the detection packet to the egress device, for a detection packet in which the delay flag bit is set, the transit device collects statistics about a sending timestamp of sending the detection packet by the transit device; for a detection packet in which the packet loss flag bit is set, the transit device collects statistics about a quantity of detection packets sent by the transit device.

Step 210: The transit device reports the flow identifier of the target service flow and the transmission quality information of the target service flow to the controller.

After obtaining the transmission quality information of the target service flow, the transit device may report the flow identifier of the target service flow and the transmission quality information of the target service flow to the controller. The transit device periodically obtains the transmission quality information of the target service flow. Correspondingly, the transit device may periodically report the flow identifier of the target service flow and the transmission quality information of the target service flow to the controller.

As described above, the detection packet may include the detection extension header, and the detection extension header may include the first field. In the packet transmission process, the value of the first field may change according to the preset rule, that is, each network device that receives the detection packet updates the value of the first field according to the preset rule. The preset rule may be that the value decreases or increases progressively. For example, the first field is the TTL field. Correspondingly, the preset rule is that the value decreases by 1 hop by hop. In this implementation of this application, after receiving the detection packet, the transit device may update the value of the first field in the detection packet according to the foregoing preset rule, and report an updated value of the first field to the controller.

Optionally, the transit device may report, to the controller at a fixed moment in each detection period, the flow identifier of the target service flow and transmission quality information that is of the target service flow and that is obtained by the transit device in the detection period. The fixed moment is, for example, an end moment of each detection period. For the transit device, the transmission quality information may include the any one or more of the quantity of detection packets received by the transit device in each detection period, the quantity of detection packets sent by the transit device in each detection period, the receiving timestamp of receiving the detection packet, and the sending timestamp of sending the detection packet. It is easy for a person skilled in the art to understand that, when reporting the flow identifier of the target service flow and the transmission quality information of the target service flow to the controller in each detection period, the transit device may simultaneously report a detection period identifier (for example, a period number) and an identifier of the transit device, so that the controller distinguishes between transmission quality information of target service flows that is reported by different transit devices in different detection periods. This is not limited in this implementation of this application.

It should be noted that, in each detection period, the transit device may report a receiving timestamp and a sending timestamp of one detection packet to the controller, and the controller determines the transmission delay of the target service flow based on the receiving timestamp and the sending timestamp of the detection packet. Alternatively, in each detection period, the transit device may report an average value of receiving timestamps of a plurality of detection packets and an average value of sending timestamps of the plurality of detection packets to the controller, and the controller may determine the transmission delay of the target service flow based on the average value of the receiving timestamps and the average value of the sending timestamps. This is not limited in this implementation of this application.

Step 211: The egress device removes the flow identifier of the target service flow from the detection packet.

The transit device sends, to the egress device, the detection packet added with the flow identifier of the target service flow. Correspondingly, the egress device may receive the detection packet that is added with the flow identifier of the target service flow and that is sent by the transit device. Then, the egress device may remove the flow identifier of the target service flow from the detection packet.

Optionally, the detection packet added with the flow identifier of the target service flow may be the extended detection packet, the extended detection packet includes the detection extension header, and the flow identifier of the target service flow is located in the detection extension header. For each received service packet, the egress device may detect whether the service packet includes the detection extension header. If the service packet includes the detection extension header, the egress device determines that the service packet is the extended detection packet, and strips the detection extension header from the extended detection packet, to remove the flow identifier of the target service flow from the extended detection packet. For example, the extended detection packet may be the IFIT detection packet, and the detection extension header may be the IFIT extension header. The egress device may strip the IFIT extension header from the IFIT detection packet, to remove the flow identifier of the target service flow from the IFIT detection packet.

It should be noted that, after removing the flow identifier of the target service flow from the detection packet, the egress device may obtain the original detection packet (where the original detection packet is the original service packet). Then, the egress device may send the detection packet to a next-hop device (which may be a network device or a user device) of the egress device.

Step 212: The egress device obtains transmission quality information of the target service flow based on the detection packet added with the flow identifier of the target service flow.

The transit device sends, to the egress device, the detection packet added with the flow identifier of the target service flow. Correspondingly, the egress device may receive the detection packet that is added with the flow identifier of the target service flow and that is sent by the transit device. Then, the egress device may obtain the transmission quality information of the target service flow based on the detection packet added with the flow identifier of the target service flow.

Optionally, the egress device may collect statistics about the transmission quality information of the target service flow based on the flow identifier of the target service flow in a process of forwarding the detection packet (receiving the detection packet added with the flow identifier of the target service flow and sending, to the next-hop device, the detection packet without the flow identifier of the target service flow), to obtain the transmission quality information of the target service flow. Optionally, the detection packet received by the egress device may be the extended detection packet. For each received service packet, the egress device may detect whether the service packet includes the detection extension header. If the service packet includes the detection extension header, the egress device determines that the service packet is the extended detection packet, reads the flow identifier of the target service flow in the extended detection packet, and collects statistics about the transmission quality information of the target service flow based on the flow identifier of the target service flow.

Optionally, the egress device may periodically collect statistics about the transmission quality information of the target service flow based on the flow identifier of the target service flow. The transmission quality may be the SLA quality, for example, the packet loss amount or the transmission delay. Correspondingly, the transmission quality information is the SLA information. For the egress device, the transmission quality information may include any one or more of a quantity of detection packets received by the egress device in each detection period, a quantity of detection packets sent by the egress device in each detection period, a receiving timestamp of receiving the detection packet, and a sending timestamp of sending the detection packet. In this implementation of this application, the detection packet is the service packet that can be used to detect the transmission quality. For the egress device, the delay flag bit and/or the packet loss flag bit may be set in the detection packet. For example, the detection packet may be the extended detection packet, the extended detection packet includes the detection extension header, and the delay flag bit and/or the packet loss flag bit are/is set in the detection extension header.

Optionally, in each detection period, for each received detection packet, the egress device may parse the detection packet to determine whether the delay flag bit and/or the packet loss flag bit are/is set in the detection packet. If the delay flag bit and/or the packet loss flag bit are/is set in the detection packet, for a detection packet in which the delay flag bit is set, the egress device collects statistics about a receiving timestamp of receiving the detection packet by the egress device; for a detection packet in which the packet loss flag bit is set, the egress device collects statistics about a quantity of detection packets received by the egress device. During sending of the detection packet to the next-hop device, for a detection packet without the delay flag bit, the egress device collects statistics about a sending timestamp of sending the detection packet by the egress device; for a detection packet without the packet loss flag bit, the egress device collects statistics about a quantity of detection packets sent by the egress device.

Step 213: The egress device reports the flow identifier of the target service flow and the transmission quality information of the target service flow to the controller.

After obtaining the transmission quality information of the target service flow, the egress device may report the flow identifier of the target service flow and the transmission quality information of the target service flow to the controller. The egress device periodically obtains the transmission quality information of the target service flow. Correspondingly, the egress device may periodically report the flow identifier of the target service flow and the transmission quality information of the target service flow to the controller.

As described above, the detection packet may include the detection extension header, and the detection extension header may include the first field. In the packet transmission process, the value of the first field may change according to the preset rule, that is, each network device that receives the detection packet updates the value of the first field according to the preset rule. The preset rule may be that the value decreases or increases progressively. For example, the first field is the TTL field. Correspondingly, the preset rule is that the value decreases by 1 hop by hop. In this implementation of this application, after receiving the detection packet, the egress device may update the value of the first field in the detection packet according to the foregoing preset rule, and report an updated value of the first field to the controller.

Optionally, the egress device may report, to the controller at a fixed moment in each detection period, the flow identifier of the target service flow and transmission quality information that is of the target service flow and that is obtained by the egress device in the detection period. The fixed moment is, for example, an end moment of each detection period. For the egress device, the transmission quality information may include the any one or more of the quantity of detection packets received by the egress device in each detection period, the quantity of detection packets sent by the egress device in each detection period, the receiving timestamp of receiving the detection packet, and the sending timestamp of sending the detection packet. It is easy for a person skilled in the art to understand that, when reporting the flow identifier of the target service flow and the transmission quality information of the target service flow to the controller in each detection period, the egress device may simultaneously report a detection period identifier (for example, a period number) and the identifier of the egress device, so that the controller distinguishes between transmission quality information of target service flows that is reported by different egress devices in different detection periods. This is not limited in this implementation of this application.

It should be noted that, in each detection period, the egress device may report a receiving timestamp and a sending timestamp of one detection packet to the controller, and the controller determines the transmission delay of the target service flow based on the receiving timestamp and the sending timestamp of the detection packet. Alternatively, in each detection period, the egress device may report an average value of receiving timestamps of a plurality of detection packets and an average value of sending timestamps of the plurality of detection packets to the controller, and the controller may determine the transmission delay of the target service flow based on the average value of the receiving timestamps and the average value of the sending timestamps. This is not limited in this implementation of this application.

It should be noted that, in the foregoing steps, the transmission quality information and the value of the first field that are reported by each network device among the ingress device, the transit device, and the egress device may be reported by using a same message, or may be separately reported by using different messages. If the transmission quality information and the value of the first field are separately reported by using different messages, both a message for reporting the value of the first field and a message for reporting the transmission quality information include the flow identifier of the target service flow.

Step 214: The controller determines the transmission quality of the target service flow based on the flow identities of the target service flow and the transmission quality information of the target service flow that are reported by the ingress device, the transit device, and the egress device.

The ingress device, the transit device, and the egress device report the flow identities of the target service flow and the transmission quality information of the target service flow to the controller. Correspondingly, the controller may separately receive the flow identities of the target service flow and the transmission quality information of the target service flow that are reported by the ingress device, the transit device, and the egress device. For example, the controller receives the flow identifier of the target service flow and the transmission quality information of the target service flow that are reported by the ingress device, receives the flow identifier of the target service flow and the transmission quality information of the target service flow that are reported by the transit device, and receives the flow identifier of the target service flow and the transmission quality information of the target service flow that are reported by the egress device.

After receiving the flow identities of the target service flow and the transmission quality information of the target service flow that are reported by the ingress device, the transit device, and the egress device, the controller may determine the transmission quality of the target service flow based on the flow identifier of the target service flow and the transmission quality information of the target service flow that are reported by at least one network device among the ingress device, the transit device, and the egress device. The transmission quality may be the SLA quality, for example, the packet loss amount or the transmission delay. The transmission delay may be an internal transmission delay of the network device, for example, an internal transmission delay of the ingress device, an internal transmission delay of the transit device, and an internal transmission delay of the egress device; or may be a transmission delay on a link between the network devices, for example, a transmission delay on a link between the ingress device and the transit device, a transmission delay on a link between the transit device and the egress device, and a transmission delay on a link between the ingress device and the egress device. The packet loss amount may be an internal packet loss amount of the network device, for example, an internal packet loss amount of the ingress device, an internal packet loss amount of the transit device, and an internal packet loss amount of the egress device; or may be a packet loss amount on the link, for example, a packet loss amount on the link between the ingress device and the transit device, a packet loss amount on the link between the transit device and the egress device, and a packet loss amount on the link between the ingress device and the egress device. This is not limited in this implementation of this application.

For example, the transmission quality includes the internal transmission delay of the ingress device. The controller may determine, based on the flow identifier of the target service flow, the identifier of the ingress device, and the detection period identifier that are reported by the ingress device, a receiving timestamp and a sending timestamp of the detection packet that are reported by the ingress device in a detection period indicated by the detection period identifier, and determine a difference between the sending timestamp and the receiving timestamp as the internal transmission delay of the ingress device.

For example, the transmission quality includes the transmission delay on the link between the ingress device and the egress device. The controller may determine, based on the flow identifier of the target service flow, the identifier of the ingress device, and the detection period identifier that are reported by the ingress device, a sending timestamp that is of the detection packet and that is reported by the ingress device in a detection period indicated by the detection period identifier, determine, based on the flow identifier of the target service flow, the identifier of the egress device, and the detection period identifier that are reported by the egress device, a receiving timestamp that is of the detection packet and that is reported by the egress device in a detection period indicated by the detection period identifier, and determine a difference between the receiving timestamp and the sending timestamp as the transmission delay on the link between the ingress device and the egress device.

For example, the transmission quality includes the internal packet loss amount of the ingress device. The controller may determine, based on the flow identifier of the target service flow, the identifier of the ingress device, and the detection period identifier that are reported by the ingress device, a quantity of received detection packets and a quantity of sent detection packets that are reported by the ingress device in a detection period indicated by the detection period identifier, and determine a difference between the quantity of received detection packets and the quantity of sent detection packets as the internal packet loss amount of the ingress device.

For example, the transmission quality includes the packet loss amount on the link between the ingress device and the egress device. The controller may determine, based on the flow identifier of the target service flow, the identifier of the ingress device, and the detection period identifier that are reported by the ingress device, a quantity of sent detection packets that is reported by the ingress device in a detection period indicated by the detection period identifier, determine, based on the flow identifier of the target service flow, the identifier of the egress device, and the detection period identifier that are reported by the egress device, a quantity of received detection packets that is reported by the egress device in a detection period indicated by the detection period identifier, and determine a difference between the quantity of sent detection packets and the quantity of received detection packets as the packet loss amount on the link between the ingress device and the egress device.

It should be noted that although only processes in which the controller determines the internal transmission delay and the internal packet loss amount of the ingress device and the transmission delay and the packet loss amount on the link between the ingress device and the egress device are enumerated in step 214, processes of determining an internal transmission delay and an internal packet loss amount of another network device and a transmission delay and a packet loss amount on another link are similar to the processes enumerated in step 214. Details are not described herein again in this implementation of this application. In addition, a person skilled in the art should understand that the manner in which the controller determines the transmission quality of the target service flow and that is enumerated in step 214 is merely an example. During actual application, the controller may alternatively determine the transmission quality of the target service flow in another manner. Details are not described herein in this implementation of this application.

In this implementation of this application, the controller may further determine a transmission path of the target service flow based on the information reported by the ingress device, the transit device, and the egress device. In an implementation, the controller may determine the transmission path based on the flow identifier that is of the target service flow and that is reported by each network device (including the ingress device, the transit device, and the egress device) and a physical network topology. Specifically, network devices that the target service flow passes through are determined based on the flow identifier that is of the target service flow and that is reported by each network device, and a connection relationship among the network devices that the target service flow passes through is determined based on the physical network topology, to determine the transmission path of the target service flow. In another implementation, the controller may determine the transmission path of the target service flow based on the value (for example, the TTL value) of the first field of the target service flow. Because the value of the first field changes (for example, decreases progressively) according to the preset rule in a transmission process of the target service flow, a sequence in which the target service flow passes through the network devices may be determined based on the values of the first field that are reported by the network devices, to determine the transmission path of the target service flow.

It should be further noted that, after determining the transmission quality of the target service flow, the controller may present the transmission quality of the target service flow, so that the user can learn of the transmission quality of the target service flow. That the controller presents the transmission quality of the target service flow may include: The controller displays the transmission quality of the target service flow; or the controller may broadcast the transmission quality of the target service flow when having a voice broadcast function. It is easy for a person skilled in the art to understand that the transmission quality determined by the controller is at a granularity of a service flow group (where the target service flow includes the at least one service flow identified by the 5-tuple information). Therefore, the controller may present the transmission quality of the target service flow at the granularity of the service flow group. This is not limited in this implementation of this application.

A sequence of the steps of the transmission quality detection method provided in this implementation of this application may be appropriately adjusted, and a step may be correspondingly added or deleted based on a situation. Any method that can be easily figured out by a person skilled in the art without departing from the technical scope disclosed in this application shall fall within the protection scope of this application, and therefore details are not described.

In conclusion, according to the transmission quality detection method provided in this implementation of this application, the ingress device determines, from the received service packet, the service packet belonging to the target service flow, obtains the transmission quality information of the target service flow based on the detection packet belonging to the target service flow, and reports the flow identifier of the target service flow and the transmission quality information of the target service flow to the controller. The controller determines the transmission quality of the target service flow based on the flow identifier of the target service flow and the transmission quality information of the target service flow. The detection packet includes the at least one service packet belonging to the target service flow, and the service packet belonging to the target service flow meets the any one or the combination of the plurality of the following conditions: the service packet is transmitted through the target transmission network, the service packet is transmitted on the target transmission path, the service packet is received through the target port of the ingress device, the service packet is transmitted through the egress device, and the service packet has the target priority. It can be learned that the target service flow includes the service packet that meets the any one or the combination of the plurality of the foregoing conditions, and usually includes the plurality of service flows identified by the 5-tuple information. Therefore, in the technical solution provided in this implementation of this application, transmission quality of the plurality of service flows identified by the 5-tuple information may be simultaneously detected, and the plurality of service flows identified by the 5-tuple information may be considered as one service flow group. Detecting the transmission quality of the target service flow is also detecting transmission quality of the service flow group. Therefore, in this implementation of this application, the transmission quality may be detected at the granularity of the service flow group. In a detection process, the network devices are under little statistics collection pressure and reporting pressure, and the controller is under little processing pressure. The technical solution is applicable to a large-scale transmission quality detection scenario.

Based on different content of the target detection indication information, the transmission quality detection method provided in this implementation of this application is applicable to different large-scale transmission quality detection scenarios such as the SR-TE scenario, the scenario using the SR policy, the scenario using the SRv6 policy, the RSVP-TE scenario, and the MPLS scenario. The target detection indication information may be configured on the ingress device based on an actual requirement, to implement on demand (on demand, OD) detection of the transmission quality. In addition, compared with a current IFIT technology with a process of collecting statistics about, reporting, and processing transmission quality information of each service flow identified by 5-tuple information, the transmission quality detection method provided in this implementation of this application provides a process of collecting statistics about, reporting, and processing the transmission quality information of the target service flow (including the plurality of service flows identified by the 5-tuple information), to greatly reduce an amount of data on which statistics collecting, reporting, and processing need to be performed in the detection process, so that a scenario of simultaneously detecting a plurality of service flows can be covered, the pressure of the network devices and the controller can be reduced, and point-to-point refined detection can be implemented.

The following provides apparatus implementations of this application that may be used to execute the method implementations of this application. For details not disclosed in the apparatus implementations of this application, refer to the method implementations of this application.

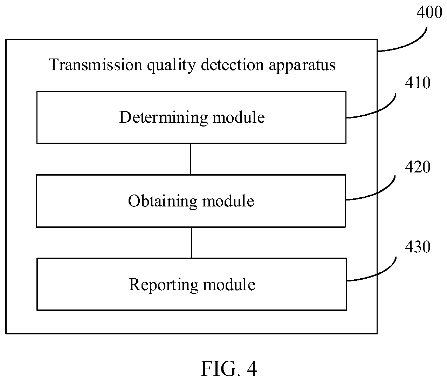

FIG. 4 is a schematic diagram of a logical structure of a transmission quality detection apparatus 400 according to an implementation of this application. The transmission quality detection apparatus 400 may be an ingress device in a communication network, or may be a functional component in the ingress device. The communication network includes a controller and a plurality of network devices. The plurality of network devices include the ingress device and an egress device. Refer to FIG. 4. The transmission quality detection apparatus 400 includes a determining module 410, an obtaining module 420, and a reporting module 430. The determining module 410 is configured to perform step 203 in the implementation shown in FIG. 2A. The obtaining module 420 is configured to perform step 206 in the implementation shown in FIG. 2A. The reporting module 430 is configured to perform step 207 in the implementation shown in FIG. 2A. Details are as follows:

The determining module 410 is configured to determine, from a received service packet, a service packet belonging to a target service flow.

The obtaining module 420 is configured to obtain transmission quality information of the target service flow based on a detection packet belonging to the target service flow, where the detection packet includes at least one service packet belonging to the target service flow.

The reporting module 430 is configured to report a flow identifier of the target service flow and the transmission quality information of the target service flow to the controller, to enable the controller to determine transmission quality of the target service flow based on the flow identifier of the target service flow and the transmission quality information of the target service flow.

The service packet belonging to the target service flow meets any one or a combination of a plurality of the following conditions: the service packet is transmitted through a target transmission network, the service packet is transmitted on a target transmission path, the service packet is received through a target port of the ingress device, the service packet is transmitted through the egress device, and the service packet has a target priority.

In conclusion, according to the transmission quality detection apparatus provided in this implementation of this application, the ingress device determines, from the received service packet, the service packet belonging to the target service flow, obtains the transmission quality information of the target service flow based on the detection packet belonging to the target service flow, and reports the flow identifier of the target service flow and the transmission quality information of the target service flow to the controller. The controller determines the transmission quality of the target service flow based on the flow identifier of the target service flow and the transmission quality information of the target service flow. The detection packet includes the at least one service packet belonging to the target service flow, and the service packet belonging to the target service flow meets the any one or the combination of the plurality of the following conditions: the service packet is transmitted through the target transmission network, the service packet is transmitted on the target transmission path, the service packet is received through the target port of the ingress device, the service packet is transmitted through the egress device, and the service packet has the target priority. It can be learned that the target service flow includes the service packet that meets the any one or the combination of the plurality of the foregoing conditions, and usually includes a plurality of service flows identified by 5-tuple information. Therefore, in the technical solution provided in this implementation of this application, transmission quality of the plurality of service flows identified by the 5-tuple information may be simultaneously detected, and the plurality of service flows identified by the 5-tuple information may be considered as one service flow group. Detecting the transmission quality of the target service flow is also detecting transmission quality of the service flow group. Therefore, in this implementation of this application, the transmission quality may be detected at a granularity of the service flow group. In a detection process, the network devices are under little statistics collection pressure and reporting pressure, and the controller is under little processing pressure. The technical solution is applicable to a large-scale transmission quality detection scenario.

Optionally, the determining module 410 is configured to determine, from the received service packet based on target detection indication information configured on the ingress device, the service packet belonging to the target service flow.

The target detection indication information includes any one or a combination of a plurality of the following: an identifier of the target transmission network for transmitting the target service flow, an identifier of the target transmission path for transmitting the target service flow, an identifier of the target port that is on the ingress device and that is for receiving the target service flow, an identifier of the egress device for transmitting the target service flow, and a priority of the target service flow.

Optionally, the target detection indication information is:
the identifier of the target transmission path for transmitting the target service flow;
the identifier of the egress device for transmitting the target service flow;
a combination of the identifier of the target transmission network for transmitting the target service flow and the identifier of the target transmission path for transmitting the target service flow; or
a combination of the identifier of the target transmission network for transmitting the target service flow and the identifier of the egress device for transmitting the target service flow.

Optionally, the identifier of the target transmission network includes a VPN identifier;
the identifier of the target transmission path includes a tunnel identifier;
the identifier of the target port includes a port number of the target port;
the identifier of the egress device includes any one of locator information of the egress device, an IP address of the egress device, and a MAC address of the egress device; and
the priority includes any one of a DSCP priority, a TOS priority, and an 802.1p priority.

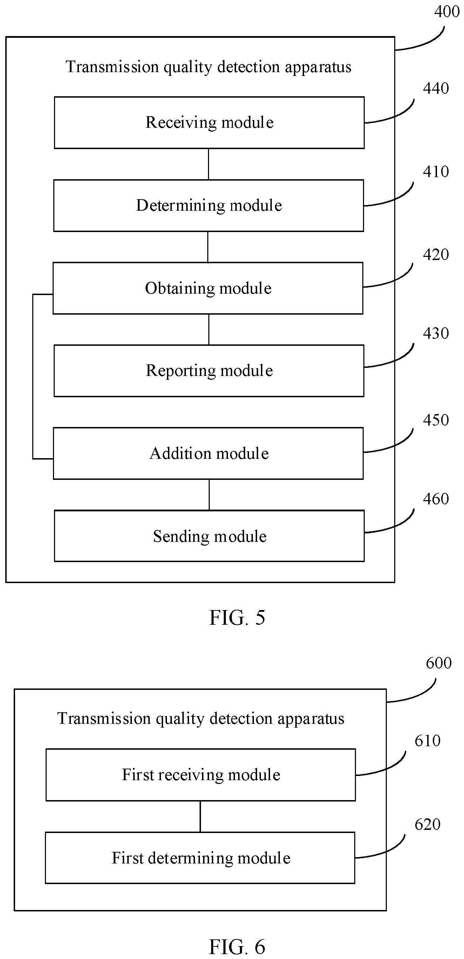

Optionally, FIG. 5 is a schematic diagram of another logical structure of the transmission quality detection apparatus 400 according to an implementation of this application. Refer to FIG. 5. Based on FIG. 4, the transmission quality detection apparatus 400 further includes a receiving module 440. The receiving module 440 is configured to perform step 202 in the implementation shown in FIG. 2A.

The receiving module 440 is configured to receive the target detection indication information delivered by the controller.

Optionally, still refer to FIG. 5. The transmission quality detection apparatus 400 further includes an addition module 450 and a sending module 460. The addition module 450 is configured to perform step 204 in the implementation shown in FIG. 2A, and the sending module 460 is configured to perform step 204 in the implementation shown in FIG. 2A. Details are as follows:

The addition module 450 is configured to add the flow identifier of the target service flow to the detection packet belonging to the target service flow.

The sending module 460 is configured to send, to a next-hop device of the ingress device, a detection packet added with the flow identifier of the target service flow, to enable the next-hop device to obtain transmission quality information of the target service flow based on the detection packet added with the flow identifier of the target service flow.

Optionally, the addition module 450 is configured to insert a detection extension header into the detection packet, where the detection extension header includes the flow identifier of the target service flow.

Optionally, the detection extension header is an IFIT extension header.

In conclusion, according to the transmission quality detection apparatus provided in this implementation of this application, the ingress device determines, from the received service packet, the service packet belonging to the target service flow, obtains the transmission quality information of the target service flow based on the detection packet belonging to the target service flow, and reports the flow identifier of the target service flow and the transmission quality information of the target service flow to the controller. The controller determines the transmission quality of the target service flow based on the flow identifier of the target service flow and the transmission quality information of the target service flow. The detection packet includes the at least one service packet belonging to the target service flow, and the service packet belonging to the target service flow meets the any one or the combination of the plurality of the following conditions: the service packet is transmitted through the target transmission network, the service packet is transmitted on the target transmission path, the service packet is received through the target port of the ingress device, the service packet is transmitted through the egress device, and the service packet has the target priority. It can be learned that the target service flow includes the service packet that meets the any one or the combination of the plurality of the foregoing conditions, and usually includes the plurality of service flows identified by the 5-tuple information. Therefore, in the technical solution provided in this implementation of this application, the transmission quality of the plurality of service flows identified by the 5-tuple information may be simultaneously detected, and the plurality of service flows identified by the 5-tuple information may be considered as one service flow group. Detecting the transmission quality of the target service flow is also detecting the transmission quality of the service flow group. Therefore, in this implementation of this application, the transmission quality may be detected at the granularity of the service flow group. In the detection process, the network devices are under little statistics collection pressure and reporting pressure, and the controller is under little processing pressure. The technical solution is applicable to the large-scale transmission quality detection scenario.

FIG. 6 is a schematic diagram of a logical structure of a transmission quality detection apparatus 600 according to an implementation of this application. The transmission quality detection apparatus 600 may be a controller in a communication network, or may be a functional component in the controller. The communication network includes the controller and a plurality of network devices. The plurality of network devices include an ingress device and an egress device. Refer to FIG. 6. The transmission quality detection apparatus 600 includes a first receiving module 610 and a determining module 620. The first receiving module 610 and the determining module 620 are configured to perform step 214 in the implementation shown in FIG. 2B. Details are as follows:

The first receiving module 610 is configured to receive a flow identifier of a target service flow and transmission quality information of the target service flow that are reported by the ingress device, where the transmission quality information is obtained by the ingress device based on a detection packet belonging to the target service flow, and the detection packet includes at least one service packet belonging to the target service flow.

The determining module 620 is configured to determine transmission quality of the target service flow based on the flow identifier of the target service flow and the transmission quality information of the target service flow that are reported by the ingress device.

The service packet belonging to the target service flow meets any one or a combination of a plurality of the following conditions: the service packet is transmitted through a target transmission network, the service packet is transmitted on a target transmission path, the service packet is received through a target port of the ingress device, the service packet is transmitted through the egress device, and the service packet has a target priority.

In conclusion, according to the transmission quality detection apparatus provided in this implementation of this application, the controller determines the transmission quality of the target service flow based on the flow identifier of the target service flow and the transmission quality information of the target service flow. The transmission quality information is obtained by the ingress device based on the detection packet belonging to the target service flow, and the detection packet includes the at least one service packet belonging to the target service flow. The service packet belonging to the target service flow meets the any one or the combination of the plurality of the following conditions: the service packet is transmitted through the target transmission network, the service packet is transmitted on the target transmission path, the service packet is received through the target port of the ingress device, the service packet is transmitted through the egress device, and the service packet has the target priority. It can be learned that the target service flow includes the service packet that meets the any one or the combination of the plurality of the foregoing conditions, and usually includes a plurality of service flows identified by 5-tuple information. Therefore, in the technical solution provided in this implementation of this application, transmission quality of the plurality of service flows identified by the 5-tuple information may be simultaneously detected, and the plurality of service flows identified by the 5-tuple information may be considered as one service flow group. Detecting the transmission quality of the target service flow is also detecting transmission quality of the service flow group. Therefore, in this implementation of this application, the transmission quality may be detected at a granularity of the service flow group. In a detection process, the network devices are under little statistics collection pressure and reporting pressure, and the controller is under little processing pressure. The technical solution is applicable to a large-scale transmission quality detection scenario.

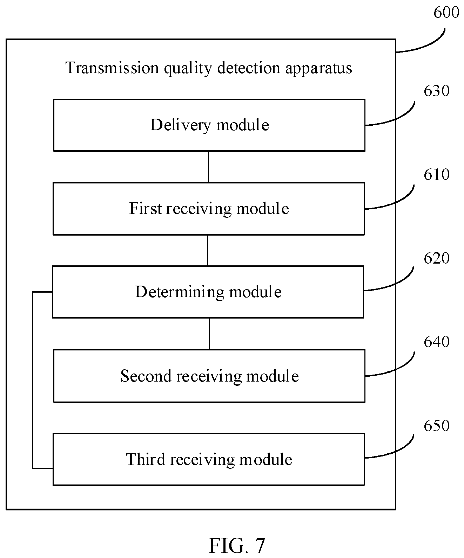

Optionally, the service packet belonging to the target service flow is determined by the ingress device from a received service packet based on target detection indication information configured on the ingress device. FIG. 7 is a schematic diagram of another logical structure of the transmission quality detection apparatus 600 according to an implementation of this application. Refer to FIG. 7. Based on FIG. 6, the transmission quality detection apparatus 600 further includes a delivery module 630. The delivery module 630 is configured to perform step 201 in the implementation shown in FIG. 2A. Details are as follows:

The delivery module 630 is configured to deliver the target detection indication information to the ingress device.

The target detection indication information includes any one or a combination of a plurality of the following: an identifier of the target transmission network for transmitting the target service flow, an identifier of the target transmission path for transmitting the target service flow, an identifier of the target port that is on the ingress device and that is for receiving the target service flow, an identifier of the egress device for transmitting the target service flow, and a priority of the target service flow.

Optionally, the target detection indication information is:
the identifier of the target transmission path for transmitting the target service flow;
the identifier of the egress device for transmitting the target service flow;
a combination of the identifier of the target transmission network for transmitting the target service flow and the identifier of the target transmission path for transmitting the target service flow; or
a combination of the identifier of the target transmission network for transmitting the target service flow and the identifier of the egress device for transmitting the target service flow.

Optionally, the identifier of the target transmission network includes a VPN identifier;
the identifier of the target transmission path includes a tunnel identifier;
the identifier of the target port includes a port number of the target port;
the identifier of the egress device includes any one of locator information of the egress device, an IP address of the egress device, and a MAC address of the egress device; and
the priority includes any one of a DSCP priority, a TOS priority, and an 802.1p priority.

Optionally, still refer to FIG. 7. The transmission quality detection apparatus 600 further includes a second receiving module 640, and the second receiving module 640 is configured to perform step 214 in the implementation shown in FIG. 2B. Details are as follows:

The second receiving module 640 is configured to receive the flow identifier of the target service flow and transmission quality information of the target service flow that are reported by the egress device, where the transmission quality information reported by the egress device is obtained by the egress device based on a detection packet added with the flow identifier of the target service flow.

The determining module 620 is configured to determine the transmission quality of the target service flow based on the flow identifier of the target service flow and the transmission quality information of the target service flow that are reported by the ingress device and the flow identifier of the target service flow and the transmission quality information of the target service flow that are reported by the egress device.

Optionally, the plurality of network devices further include at least one transit device located between the ingress device and the egress device. Still refer to FIG. 7. The transmission quality detection apparatus 600 further includes a third receiving module 650. The third receiving module 650 is configured to perform step 214 in the implementation shown in FIG. 2B. Details are as follows:

The third receiving module 650 is configured to receive the flow identifier of the target service flow and transmission quality information of the target service flow that are reported by the transit device, where the transmission quality information reported by the transit device is obtained by the transit device based on a detection packet added with the flow identifier of the target service flow.

The determining module 620 is configured to determine the transmission quality of the target service flow based on the flow identifier of the target service flow and the transmission quality information of the target service flow that are reported by the ingress device, the flow identifier of the target service flow and the transmission quality information of the target service flow that are reported by the transit device, and the flow identifier of the target service flow and the transmission quality information of the target service flow that are reported by the egress device.

In conclusion, according to the transmission quality detection apparatus provided in this implementation of this application, the controller determines the transmission quality of the target service flow based on the flow identifier of the target service flow and the transmission quality information of the target service flow. The transmission quality information is obtained by the ingress device based on the detection packet belonging to the target service flow, and the detection packet includes the at least one service packet belonging to the target service flow. The service packet belonging to the target service flow meets the any one or the combination of the plurality of the following conditions: the service packet is transmitted through the target transmission network, the service packet is transmitted on the target transmission path, the service packet is received through the target port of the ingress device, the service packet is transmitted through the egress device, and the service packet has the target priority. It can be learned that the target service flow includes the service packet that meets the any one or the combination of the plurality of the foregoing conditions, and usually includes the plurality of service flows identified by the 5-tuple information. Therefore, in the technical solution provided in this implementation of this application, the transmission quality of the plurality of service flows identified by the 5-tuple information may be simultaneously detected, and the plurality of service flows identified by the 5-tuple information may be considered as one service flow group. Detecting the transmission quality of the target service flow is also detecting the transmission quality of the service flow group. Therefore, in this implementation of this application, the transmission quality may be detected at the granularity of the service flow group. In the detection process, the network devices are under little statistics collection pressure and reporting pressure, and the controller is under little processing pressure. The technical solution is applicable to the large-scale transmission quality detection scenario.

It should be noted that, when the transmission quality detection apparatus provided in the foregoing implementations detects the transmission quality, division into the foregoing functional modules is used only as an example for description. During actual application, the foregoing functions may be allocated to different functional modules for implementation as required, that is, an internal structure of a device is divided into different functional modules, to implement all or some of the functions described above. In addition, the transmission quality detection apparatuses provided in the foregoing implementations and the transmission quality detection method implementations belong to a same concept. For specific implementation processes thereof, refer to the method implementations. Details are not described herein again.

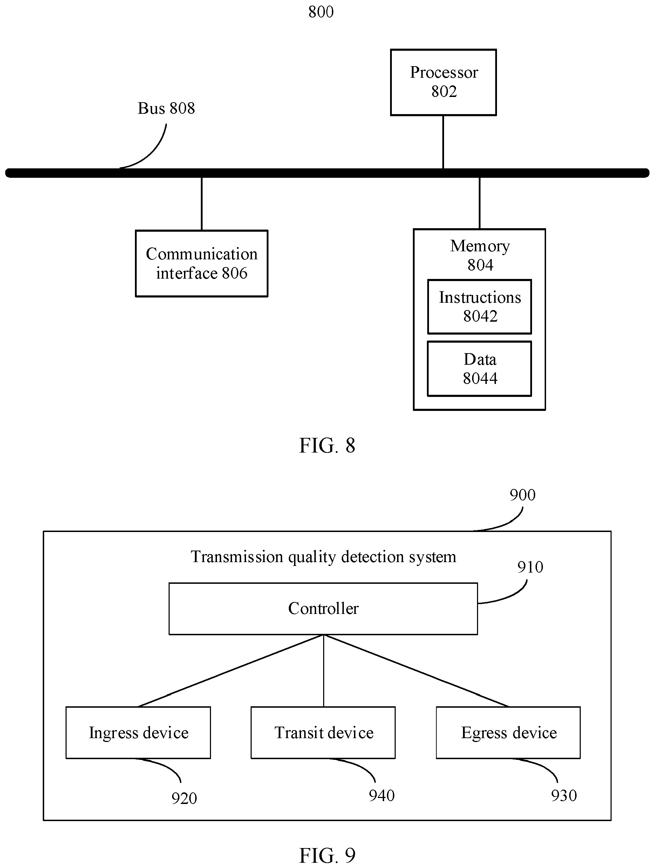

FIG. 8 is a schematic diagram of a hardware structure of a transmission quality detection apparatus 800 according to an implementation of this application. The transmission quality detection apparatus 800 may be a controller or a network device (for example, an ingress device). The controller may be a functional module deployed in a server, a server, a server cluster including several servers, or a cloud computing service center. Refer to FIG. 8. The transmission quality detection apparatus 800 includes a processor 802, a memory 804, a communication interface 806, and a bus 808. The processor 802, the memory 804, and the communication interface 806 are in communication connection with each other through the bus 808. A person skilled in the art should understand that a connection manner among the processor 802, the memory 804, and the communication interface 806 shown in FIG. 8 is merely an example. In an implementation process, the processor 802, the memory 804, and the communication interface 806 may alternatively be in communication connection with each other in another connection manner other than using the bus 808.

The memory 804 may be configured to store instructions 8042 and data 8044. In this implementation of this application, the memory 804 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, or a register. In addition, the memory 804 may include a hard disk and/or a main memory.

The processor 802 may be a general purpose processor, and the general purpose processor may be a processor that performs a specific step and/or operation by reading and executing instructions (for example, the instructions 8042) stored in a memory (for example, the memory 804). In a process of performing the foregoing step and/or operation, the general purpose processor may use data (for example, the data 8044) stored in a memory (for example, the memory 804). For example, the general purpose processor may be, but is not limited to, a central processing unit (central processing unit, CPU). In addition, the processor 802 may alternatively be a special purpose processor. The special purpose processor may be a specially designed processor configured to perform a specific step and/or operation. For example, the special purpose processor may be, but is not limited to, a digital signal processor (digital signal processor, DSP), an application-specific integrated circuit (application-specific integrated circuit, ASIC), or a field programmable gate array (field programmable gate array, FPGA). In addition, the processor 802 may alternatively be a combination of a plurality of processors, for example, a multi-core processor. The processor 802 may include at least one circuit, to perform all or some of the steps of the transmission quality detection method provided in the foregoing implementations.

The communication interface 806 may include an input/output (input/output, I/O) interface, a physical interface, a logical interface, and the like that are used to implement interconnection of components inside the transmission quality detection apparatus 800 and an interface configured to implement interconnection between the transmission quality detection apparatus 800 and another device (for example, a network device or a user device). The physical interface may be a gigabit Ethernet (gigabit Ethernet, GE) interface, and may be configured to implement the interconnection between the transmission quality detection apparatus 800 and the another device (for example, the network device or the user device). The logical interface is an internal interface of the transmission quality detection apparatus 800, and may be configured to implement the interconnection of the components inside the transmission quality detection apparatus 800. It is easy to understand that the communication interface 806 may be used by the transmission quality detection apparatus 800 to communicate with another network device and/or user device. For example, the communication interface 806 is used by the transmission quality detection apparatus 800 to send a service packet to and receive a service packet from the another network device.

The bus 808 may be in any type, is a communication bus used to implement interconnection among the processor 802, the memory 804, and the communication interface 806, and is, for example, a system bus.

The foregoing components may be separately disposed on chips that are independent of each other, or at least a part or all of the components may be disposed on a same chip. Whether all the components are separately disposed on different chips or integrated and disposed on one or more chips usually depends on a requirement of a product design. This implementation of this application imposes no limitation on specific implementations of the foregoing components.

The transmission quality detection apparatus 800 shown in FIG. 8 is merely an example. In an implementation process, the transmission quality detection apparatus 800 may further include another component. This is not listed one by one in this specification. The transmission quality detection apparatus 800 shown in FIG. 8 may determine transmission quality of a target service flow by performing all or a part of the steps of the transmission quality detection method provided in the foregoing implementations.

An implementation of this application provides a transmission quality detection system. The transmission quality detection system includes a controller and a plurality of network devices, and the plurality of network devices include an ingress device and an egress device. In addition, the plurality of network devices may further include at least one transit device located between the ingress device and the egress device. In a possible implementation, the ingress device includes the transmission quality detection apparatus 400 shown in FIG. 4 or FIG. 5, and the controller includes the transmission quality detection apparatus 600 shown in FIG. 6 or FIG. 7. In another possible implementation, at least one of the ingress device and the controller may be the transmission quality detection apparatus 800 shown in FIG. 8.

Optionally, FIG. 9 is a schematic diagram of a transmission quality detection system 900 according to an implementation of this application. Refer to FIG. 9. The transmission quality detection system 900 includes a controller 910 and a plurality of network devices, and the plurality of network devices include an ingress device 920 and an egress device 930.

The ingress device 920 is configured to: determine, from a received service packet, a service packet belonging to a target service flow, obtain transmission quality information of the target service flow based on a detection packet belonging to the target service flow, and report a flow identifier of the target service flow and the transmission quality information of the target service flow to the controller 910, where the detection packet includes at least one service packet belonging to the target service flow.

The controller 910 is configured to determine transmission quality of the target service flow based on the flow identifier of the target service flow and the transmission quality information of the target service flow that are reported by the ingress device 920.

The service packet belonging to the target service flow meets any one or a combination of a plurality of the following conditions: the service packet is transmitted through a target transmission network, the service packet is transmitted on a target transmission path, the service packet is received through a target port of the ingress device 920, the service packet is transmitted through the egress device 930, and the service packet has a target priority.

Optionally, the ingress device 920 is configured to determine, from the received service packet based on target detection indication information configured on the ingress device 920, the service packet belonging to the target service flow.

The target detection indication information includes any one or a combination of a plurality of the following: an identifier of the target transmission network for transmitting the target service flow, an identifier of the target transmission path for transmitting the target service flow, an identifier of the target port that is on the ingress device and that is for receiving the target service flow, an identifier of the egress device for transmitting the target service flow, and a priority of the target service flow.

Optionally, the target detection indication information is:
the identifier of the target transmission path for transmitting the target service flow;
the identifier of the egress device for transmitting the target service flow;
a combination of the identifier of the target transmission network for transmitting the target service flow and the identifier of the target transmission path for transmitting the target service flow; or
a combination of the identifier of the target transmission network for transmitting the target service flow and the identifier of the egress device for transmitting the target service flow.

Optionally, the identifier of the target transmission network includes a VPN identifier;
the identifier of the target transmission path includes a tunnel identifier;
the identifier of the target port includes a port number of the target port;
the identifier of the egress device includes any one of locator information of the egress device, an IP address of the egress device, and a MAC address of the egress device; and
the priority includes any one of a DSCP priority, a TOS priority, and an 802.1p priority.

Optionally, the controller 910 is further configured to deliver the target detection indication information to the ingress device 920.

Optionally, the ingress device 920 is further configured to add the flow identifier of the target service flow to the detection packet belonging to the target service flow, and send, to a next-hop device of the ingress device 920, a detection packet added with the flow identifier of the target service flow, where the next-hop device of the ingress device 920 may be the egress device 930, or may be a transit device located between the ingress device 920 and the egress device 930.

The egress device 930 is configured to obtain transmission quality information of the target service flow based on a received detection packet added with the flow identifier of the target service flow, and report the flow identifier of the target service flow and the transmission quality information of the target service flow to the controller 910.

The controller 910 is further configured to determine the transmission quality of the target service flow based on the flow identifier of the target service flow and the transmission quality information of the target service flow that are reported by the ingress device 920 and the flow identifier of the target service flow and the transmission quality information of the target service flow that are reported by the egress device.

Optionally, as shown in FIG. 9, the plurality of network devices further include at least one transit device 940 (only one transit device is shown in FIG. 9) located between the ingress device 920 and the egress device 930.

The transit device 940 is configured to obtain transmission quality information of the target service flow based on a received detection packet added with the flow identifier of the target service flow, and report the flow identifier of the target service flow and the transmission quality information of the target service flow to the controller 910.

The controller 910 is configured to determine the transmission quality of the target service flow based on the flow identifier of the target service flow and the transmission quality information of the target service flow that are reported by the ingress device 920, the flow identifier of the target service flow and the transmission quality information of the target service flow that are reported by the transit device 940, and the flow identifier of the target service flow and the transmission quality information of the target service flow that are reported by the egress device.

Optionally, the ingress device 920 is configured to insert a detection extension header into the detection packet, where the detection extension header includes the flow identifier of the target service flow.

Optionally, the detection extension header is an IFIT extension header.

In conclusion, according to the transmission quality detection system provided in this implementation of this application, the ingress device determines, from the received service packet, the service packet belonging to the target service flow, obtains the transmission quality information of the target service flow based on the detection packet belonging to the target service flow, and reports the flow identifier of the target service flow and the transmission quality information of the target service flow to the controller. The controller determines the transmission quality of the target service flow based on the flow identifier of the target service flow and the transmission quality information of the target service flow. The detection packet includes the at least one service packet belonging to the target service flow, and the service packet belonging to the target service flow meets the any one or the combination of the plurality of the following conditions: the service packet is transmitted through the target transmission network, the service packet is transmitted on the target transmission path, the service packet is received through the target port of the ingress device, the service packet is transmitted through the egress device, and the service packet has the target priority. It can be learned that the target service flow includes the service packet that meets the any one or the combination of the plurality of the foregoing conditions, and usually includes a plurality of service flows identified by 5-tuple information. Therefore, in the technical solution provided in this implementation of this application, transmission quality of the plurality of service flows identified by the 5-tuple information may be simultaneously detected, and the plurality of service flows identified by the 5-tuple information may be considered as one service flow group. Detecting the transmission quality of the target service flow is also detecting transmission quality of the service flow group. Therefore, in this implementation of this application, the transmission quality may be detected at a granularity of the service flow group. In a detection process, the network devices are under little statistics collection pressure and reporting pressure, and the controller is under little processing pressure. The technical solution is applicable to a large-scale transmission quality detection scenario.

An implementation of this application provides a computer storage medium. The computer storage medium stores a computer program. When the computer program is executed by a processor, all or some of the steps of the transmission quality detection method provided in the implementation shown in FIG. 2A and FIG. 2B are implemented.

An implementation of this application provides a computer program product including instructions. When the computer program product runs on a computer, the computer is enabled to perform all or some of the steps of the transmission quality detection method provided in the implementation shown in FIG. 2A and FIG. 2B.

An implementation of this application provides a chip. The chip includes a programmable logic circuit and/or program instructions. When the chip runs, the chip is configured to implement all or some of the steps of the transmission quality detection method provided in the implementation shown in FIG. 2A and FIG. 2B.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that, in this specification, the term "at least one" indicates one or more, and "a plurality of" indicates two or more. Meanings of similar terms such as "at least one type" are similarly understood.

It should be understood that sequence numbers of the foregoing processes do not mean execution sequences in implementations of this application. The execution sequences of the processes should be determined based on functions and internal logic of the processes, and should not constitute any limitation on the implementation processes of implementations of this application.

The sequence numbers of the foregoing implementations of this application are merely for description, and are not intended to indicate priorities of the implementations.

A person of ordinary skill in the art may understand that all or some of the steps of the foregoing implementations may be implemented by hardware or a program instructing related hardware. The program may be stored in a computer-readable storage medium. The storage medium may be a read-only memory, a magnetic disk, a compact disc, or the like.

The scope of protection is defined by the appended claims.

## Claims

1. A transmission quality detection method, applied to an ingress device in a transmission quality detection system, wherein the transmission quality detection system comprises a controller and a plurality of network devices, the plurality of network devices comprise the ingress device and an egress device, and the method comprises:
determining (203), from a received service packet, a service packet belonging to a target service flow group, wherein the target service flow group service flow group includes a plurality of service flows identified by 5-tuple information, wherein the 5-tuple information includes a source IP address, a destination IP address, a source port, a destination port, and a protocol number;
obtaining (206) transmission quality information of the target service flow group based on a detection packet belonging to the target service flow group, wherein the detection packet comprises at least one service packet belonging to the target service flow group; and
reporting (207) a flow identifier of the target service flow group and the transmission quality information of the target service flow group to the controller, to enable the controller to determine transmission quality of the target service flow group based on the flow identifier of the target service flow group and the transmission quality information of the target service flow group that are reported by the ingress device, wherein
the service packet belonging to the target service flow group meets any one or a combination of a plurality of the following conditions: the service packet is transmitted through a target transmission network, the service packet is transmitted on a target transmission path, the service packet is received through a target port of the ingress device, the service packet is transmitted through the egress device, and the service packet has a target priority.

2. The method according to claim 1, wherein
the determining, from a received service packet, a service packet belonging to a target service flow group comprises:
determining, from the received service packet based on target detection indication information configured on the ingress device, the service packet belonging to the target service flow group, wherein
the target detection indication information comprises any one or a combination of a plurality of the following: an identifier of the target transmission network for transmitting the target service flow group, an identifier of the target transmission path for transmitting the target service flow group, an identifier of the target port that is on the ingress device and that is for receiving the target service flow group, an identifier of the egress device for transmitting the target service flow group, and a priority of the target service flow group.

3. The method according to claim 2, wherein
the target detection indication information is:
the identifier of the target transmission path for transmitting the target service flow group;
the identifier of the egress device for transmitting the target service flow group;
a combination of the identifier of the target transmission network for transmitting the target service flow group and the identifier of the target transmission path for transmitting the target service flow group; or
a combination of the identifier of the target transmission network for transmitting the target service flow group and the identifier of the egress device for transmitting the target service flow group.

4. The method according to claim 2 or 3, wherein
the identifier of the target transmission network comprises a virtual private network, VPN, identifier;
the identifier of the target transmission path comprises a tunnel identifier;
the identifier of the target port comprises a port number of the target port;
the identifier of the egress device comprises any one of locator information of the egress device, an Internet Protocol, IP, address of the egress device, and a Media Access Control, MAC, address of the egress device; and
the priority comprises any one of a differentiated services code point, DSCP, priority, a type of service, TOS, priority, and an 802.1p priority.

5. The method according to any one of claims 2 to 4, wherein
before the determining, from the received service packet based on target detection indication information configured on the ingress device, the service packet belonging to the target service flow group, the method further comprises:
receiving the target detection indication information delivered by the controller.

6. The method according to any one of claims 1 to 5, wherein
after the determining, from a received service packet, a service packet belonging to a target service flow group, the method further comprises:
adding the flow identifier of the target service flow group to the detection packet belonging to the target service flow group; and
sending, to a next-hop device of the ingress device, a detection packet added with the flow identifier of the target service flow group, to enable the next-hop device to obtain transmission quality information of the target service flow group based on the detection packet added with the flow identifier of the target service flow group.

7. The method according to claim 6, wherein
the adding the flow identifier of the target service flow group to the detection packet belonging to the target service flow group comprises:
inserting a detection extension header into the detection packet, wherein the detection extension header comprises the flow identifier of the target service flow group.

8. The method according to claim 7, wherein
the detection extension header is an in-situ flow information telemetry, IFIT, extension header.

9. A transmission quality detection method, applied to a controller in a transmission quality detection system, wherein the transmission quality detection system comprises the controller and a plurality of network devices, the plurality of network devices comprise an ingress device and an egress device, and the method comprises:
receiving (207) a flow identifier of a target service flow group and transmission quality information of the target service flow group that are reported by the ingress device, wherein the transmission quality information is obtained by the ingress device based on a detection packet belonging to the target service flow group, and the detection packet comprises at least one service packet belonging to the target service flow group, wherein the target service flow group service flow group includes a plurality of service flows identified by 5-tuple information, wherein the 5-tuple information includes a source IP address, a destination IP address, a source port, a destination port, and a protocol number; and
determining (214) transmission quality of the target service flow group based on the flow identifier of the target service flow group and the transmission quality information of the target service flow group that are reported by the ingress device, wherein
the service packet belonging to the target service flow group meets any one or a combination of a plurality of the following conditions: the service packet is transmitted through a target transmission network, the service packet is transmitted on a target transmission path, the service packet is received through a target port of the ingress device, the service packet is transmitted through the egress device, and the service packet has a target priority.

10. The method according to claim 9, wherein
before the receiving a flow identifier of a target service flow group and transmission quality information of the target service flow group that are reported by the ingress device, the method further comprises:
delivering the target detection indication information to the ingress device, wherein the target detection indication information is used to determine the service packet belonging to the target service flow group and wherein
the target detection indication information comprises any one or a combination of a plurality of the following: an identifier of the target transmission network for transmitting the target service flow group, an identifier of the target transmission path for transmitting the target service flow group, an identifier of the target port that is on the ingress device and that is for receiving the target service flow group, an identifier of the egress device for transmitting the target service flow group, and a priority of the target service flow group.

11. The method according to claim 9 or 10, wherein the method further comprises:
receiving the flow identifier of the target service flow group and transmission quality information of the target service flow group that are reported by the egress device, wherein the transmission quality information reported by the egress device is obtained by the egress device based on a detection packet added with the flow identifier of the target service flow group; and
the determining transmission quality of the target service flow group based on the flow identifier of the target service flow group and the transmission quality information of the target service flow group that are reported by the ingress device comprises:
determining the transmission quality of the target service flow group based on the flow identifier of the target service flow group and the transmission quality information of the target service flow group that are reported by the ingress device and the flow identifier of the target service flow group and the transmission quality information of the target service flow group that are reported by the egress device.

12. The method according to claim 11, wherein the plurality of network devices further comprise at least one transit device located between the ingress device and the egress device, and the method further comprises:
receiving the flow identifier of the target service flow group and transmission quality information of the target service flow group that are reported by the transit device, wherein the transmission quality information reported by the transit device is obtained by the transit device based on a detection packet added with the flow identifier of the target service flow group; and
the determining the transmission quality of the target service flow group based on the flow identifier of the target service flow group and the transmission quality information of the target service flow group that are reported by the ingress device and the flow identifier of the target service flow group and the transmission quality information of the target service flow group that are reported by the egress device comprises:
determining the transmission quality of the target service flow group based on the flow identifier of the target service flow group and the transmission quality information of the target service flow group that are reported by the ingress device, the flow identifier of the target service flow group and the transmission quality information of the target service flow group that are reported by the transit device, and the flow identifier of the target service flow group and the transmission quality information of the target service flow group that are reported by the egress device.

13. A transmission quality detection apparatus, wherein the transmission quality detection apparatus is configured to implement the transmission quality detection method according to any one of claims 1 to 8.

14. A transmission quality detection apparatus, wherein the transmission quality detection apparatus is configured to implement the transmission quality detection method according to any one of claims 9 to 12.

15. A transmission quality detection system (900), wherein the system comprises a controller (910) and a plurality of network devices (920, 930, 940), and the plurality of network devices comprise an ingress device and an egress device, wherein
the ingress device is configured to: determine, from a received service packet, a service packet belonging to a target service flow group, obtain transmission quality information of the target service flow group based on a detection packet belonging to the target service flow group, and report a flow identifier of the target service flow group and the transmission quality information of the target service flow group to the controller, wherein the detection packet comprises at least one service packet belonging to the target service flow group, wherein the target service flow group service flow group includes a plurality of service flows identified by 5-tuple information, wherein the 5-tuple information includes a source IP address, a destination IP address, a source port, a destination port, and a protocol number; and
the controller is configured to determine transmission quality of the target service flow group based on the flow identifier of the target service flow group and the transmission quality information of the target service flow group that are reported by the ingress device, wherein
the service packet belonging to the target service flow group meets any one or a combination of a plurality of the following conditions: the service packet is transmitted through a target transmission network, the service packet is transmitted on a target transmission path, the service packet is received through a target port of the ingress device, the service packet is transmitted through the egress device, and the service packet has a target priority.

## Patentansprüche

1. Verfahren zur Detektion einer Übertragungsqualität, das auf ein Eingangsgerät in einem System zur Detektion einer Übertragungsqualität angewendet wird, wobei das System zur Detektion einer Übertragungsqualität eine Steuerung und eine Vielzahl von Netzwerkgeräten umfasst, die Vielzahl von Netzwerkgeräten das Eingangsgerät und ein Ausgangsgerät umfasst und das Verfahren Folgendes umfasst:
Bestimmen (203) eines Dienstpakets, das zu einer Ziel-Dienstflussgruppe gehört, anhand eines empfangenen Dienstpakets, wobei die Dienstflussgruppe der Ziel-Dienstflussgruppe eine Vielzahl von Dienstflüssen, die durch 5-Tupel-Informationen identifiziert werden, beinhaltet, wobei die 5-Tupel-Informationen eine Quell-IP-Adresse, eine Ziel-IP-Adresse, einen Quell-Port, einen Ziel-Port und eine Protokollnummer beinhalten;
Erlangen (206) von Übertragungsqualitätsinformationen der Ziel-Dienstflussgruppe basierend auf einem Detektionspaket, das zu der Ziel-Dienstflussgruppe gehört, wobei das Detektionspaket mindestens ein Dienstpaket, das zu der Ziel-Dienstflussgruppe gehört, umfasst; und
Melden (207) einer Flusskennung der Ziel-Dienstflussgruppe und der Übertragungsqualitätsinformationen der Ziel-Dienstflussgruppe an die Steuerung, um die Steuerung in die Lage zu versetzen, die Übertragungsqualität der Ziel-Dienstflussgruppe basierend auf der Flusskennung der Ziel-Dienstflussgruppe und den Übertragungsqualitätsinformationen der Ziel-Dienstflussgruppe, die durch das Eingangsgerät gemeldet werden, zu bestimmen, wobei
das Dienstpaket, das zu der Ziel-Dienstflussgruppe gehört, eine beliebige oder eine Kombination einer Vielzahl der folgenden Bedingungen erfüllt: das Dienstpaket wird über ein Zielübertragungsnetzwerk übertragen, das Dienstpaket wird auf einem Zielübertragungspfad übertragen, das Dienstpaket wird über einen Zielport des Eingangsgeräts empfangen, das Dienstpaket wird über das Ausgangsgerät übertragen und das Dienstpaket weist eine Zielpriorität auf.

2. Verfahren nach Anspruch 1, wobei
das Bestimmen eines Dienstpakets, das zu einer Ziel-Dienstflussgruppe gehört, anhand eines empfangenen Dienstpakets, Folgendes umfasst:
Bestimmen des Dienstpakets, das zu der Ziel-Dienstflussgruppe gehört, anhand des empfangenen Dienstpakets, basierend auf Zieldetektionsanzeigeinformationen, die auf dem Eingangsgerät konfiguriert sind, wobei
die Zieldetektionsanzeigeinformationen eine beliebige oder eine Kombination einer Vielzahl der Folgenden umfassen: eine Kennung des Zielübertragungsnetzwerks zum Übertragen der Ziel-Dienstflussgruppe, eine Kennung des Zielübertragungspfads zum Übertragen der Ziel-Dienstflussgruppe, eine Kennung des Zielports, der sich auf dem Eingangsgerät befindet und zum Empfangen der Ziel-Dienstflussgruppe dient, eine Kennung des Ausgangsgeräts zum Übertragen der Ziel-Dienstflussgruppe und eine Priorität der Ziel-Dienstflussgruppe.

3. Verfahren nach Anspruch 2, wobei
die Zieldetektionsanzeigeinformationen die Folgenden sind:
die Kennung des Zielübertragungspfads zum Übertragen der Ziel-Dienstflussgruppe;
die Kennung des Ausgangsgeräts zum Übertragen der Ziel-Dienstflussgruppe;
eine Kombination aus der Kennung des Zielübertragungsnetzwerks zum Übertragen der Ziel-Dienstflussgruppe und der Kennung des Zielübertragungspfades zum Übertragen der Ziel-Dienstflussgruppe; oder
eine Kombination aus der Kennung des Zielübertragungsnetzwerks zum Übertragen der Ziel-Dienstflussgruppe und der Kennung des Ausgangsgeräts zum Übertragen der Ziel-Dienstflussgruppe.

4. Verfahren nach Anspruch 2 oder 3, wobei
die Kennung des Zielübertragungsnetzwerks eine Kennung für ein virtuelles privates Netzwerk, VPN-Kennung, umfasst;
die Kennung des Zielübertragungspfads eine Tunnelkennung umfasst;
die Kennung des Zielports eine Portnummer des Zielports umfasst; die Kennung des Ausgangsgeräts ein beliebiges von Positionsanzeigerinformationen des Ausgangsgeräts, einer Internetprotokoll-Adresse, IP-Adresse, des Ausgangsgeräts und einer Media-Access-Control-Adresse, MAC-Adresse, des Ausgangsgeräts umfasst; und
die Priorität eine beliebige von einer Differentiated-Services-Code-Point-Priorität, DSCP-Priorität, einer Diensttyp-Priorität, TOS-Priorität, und einer 802.1p-Priorität umfasst.

5. Verfahren nach einem der Ansprüche 2 bis 4, wobei das Verfahren vor dem Bestimmen des Dienstpakets, das zu der Ziel-Dienstflussgruppe gehört, anhand des empfangenen Dienstpakets, basierend auf Zieldetektionsanzeigeinformationen, die auf dem Eingangsgerät konfiguriert sind, ferner Folgendes umfasst:
Empfangen der Zieldetektionsanzeigeinformationen, die durch die Steuerung geliefert werden.

6. Verfahren nach einem der Ansprüche 1 bis 5, wobei das Verfahren nach dem Bestimmen eines Dienstpakets, das zu einer Ziel-Dienstflussgruppe gehört, anhand eines empfangenen Dienstpakets, ferner Folgendes umfasst:
Hinzufügen der Flusskennung der Ziel-Dienstflussgruppe zu dem Detektionspaket, das zu der Ziel-Dienstflussgruppe gehört; und Senden, an ein Nächster-Hop-Gerät des Eingangsgeräts, eines Detektionspakets, dem die Flusskennung der Ziel-Dienstflussgruppe hinzugefügt wurde, um das Nächster-Hop-Gerät in die Lage zu versetzen, Übertragungsqualitätsinformationen der Ziel-Dienstflussgruppe basierend auf dem Detektionspaket, dem die Flusskennung der Ziel-Dienstflussgruppe hinzugefügt wurde, zu erlangen.

7. Verfahren nach Anspruch 6, wobei
das Hinzufügen der Flusskennung der Ziel-Dienstflussgruppe zu dem Detektionspaket, das zu der Ziel-Dienstflussgruppe gehört, Folgendes umfasst:
Einfügen eines Detektionserweiterungsheaders in das Detektionspaket, wobei der Detektionserweiterungsheader die Flusskennung der Ziel-Dienstflussgruppe umfasst.

8. Verfahren nach Anspruch 7, wobei
der Detektionserweiterungsheader ein In-situ-Flussinformationstelemetrie-Erweiterungsheader, IFIT-Erweiterungsheader, ist.

9. Verfahren zur Detektion einer Übertragungsqualität, das auf eine Steuerung in einem System zur Detektion einer Übertragungsqualität angewendet wird, wobei das System zur Detektion einer Übertragungsqualität die Steuerung und eine Vielzahl von Netzwerkgeräten umfasst, die Vielzahl von Netzwerkgeräten ein Eingangsgerät und ein Ausgangsgerät umfasst und das Verfahren Folgendes umfasst:
Empfangen (207) einer Flusskennung einer Ziel-Dienstflussgruppe und von Übertragungsqualitätsinformationen der Ziel-Dienstflussgruppe, die durch das Eingangsgerät gemeldet werden, wobei die Übertragungsqualitätsinformationen durch das Eingangsgerät basierend auf einem Detektionspaket, das zu der Ziel-Dienstflussgruppe gehört, erlangt werden und das Detektionspaket mindestens ein Dienstpaket, das zu der Ziel-Dienstflussgruppe gehört, umfasst, wobei die Dienstflussgruppe der Ziel-Dienstflussgruppe eine Vielzahl von Dienstflüssen, die durch 5-Tupel-Informationen identifiziert werden, beinhaltet, wobei die 5-Tupel-Informationen eine Quell-IP-Adresse, eine Ziel-IP-Adresse, einen Quell-Port, einen Ziel-Port und eine Protokollnummer beinhalten; und
Bestimmen (214) einer Übertragungsqualität der Ziel-Dienstflussgruppe basierend auf der Flusskennung der Ziel-Dienstflussgruppe und den Übertragungsqualitätsinformationen der Ziel-Dienstflussgruppe, die durch das Eingangsgerät gemeldet werden, wobei
das Dienstpaket, das zu der Ziel-Dienstflussgruppe gehört, eine beliebige oder eine Kombination einer Vielzahl der folgenden Bedingungen erfüllt: das Dienstpaket wird über ein Zielübertragungsnetzwerk übertragen, das Dienstpaket wird auf einem Zielübertragungspfad übertragen, das Dienstpaket wird über einen Zielport des Eingangsgeräts empfangen, das Dienstpaket wird über das Ausgangsgerät übertragen und das Dienstpaket weist eine Zielpriorität auf.

10. Verfahren nach Anspruch 9, wobei
das Verfahren vor dem Empfangen einer Flusskennung einer Ziel-Dienstflussgruppe und von Übertragungsqualitätsinformationen der Ziel-Dienstflussgruppe, die durch das Eingangsgerät gemeldet werden, ferner Folgendes umfasst:
Liefern der Zieldetektionsanzeigeinformationen an das Eingangsgerät, wobei die Zieldetektionsanzeigeinformationen verwendet werden, um das Dienstpaket, das zu der Ziel-Dienstflussgruppe gehört, zu bestimmen, und wobei die Zieldetektionsanzeigeinformationen eine beliebige oder eine Kombination einer Vielzahl der Folgenden umfassen: eine Kennung des Zielübertragungsnetzwerks zum Übertragen der Ziel-Dienstflussgruppe, eine Kennung des Zielübertragungspfads zum Übertragen der Ziel-Dienstflussgruppe, eine Kennung des Zielports, der sich auf dem Eingangsgerät befindet und zum Empfangen der Ziel-Dienstflussgruppe dient, eine Kennung des Ausgangsgeräts zum Übertragen der Ziel-Dienstflussgruppe und eine Priorität der Ziel-Dienstflussgruppe.

11. Verfahren nach Anspruch 9 oder 10, wobei das Verfahren ferner Folgendes umfasst:
Empfangen der Flusskennung der Ziel-Dienstflussgruppe und Übertragungsqualitätsinformationen der Ziel-Dienstflussgruppe, die durch das Ausgangsgerät gemeldet werden, wobei die Übertragungsqualitätsinformationen, die durch das Ausgangsgerät gemeldet werden, durch das Ausgangsgerät basierend auf einem Detektionspaket, dem die Flusskennung der Ziel-Dienstflussgruppe hinzugefügt wurde, erlangt werden; und
das Bestimmen einer Übertragungsqualität der Ziel-Dienstflussgruppe basierend auf der Flusskennung der Ziel-Dienstflussgruppe und den Übertragungsqualitätsinformationen der Ziel-Dienstflussgruppe, die durch das Eingangsgerät gemeldet werden, Folgendes umfasst:
Bestimmen der Übertragungsqualität der Ziel-Dienstflussgruppe basierend auf der Flusskennung der Ziel-Dienstflussgruppe und den Übertragungsqualitätsinformationen der Ziel-Dienstflussgruppe, die durch das Eingangsgerät gemeldet werden, und der Flusskennung der Ziel-Dienstflussgruppe und den Übertragungsqualitätsinformationen der Ziel-Dienstflussgruppe, die durch das Ausgangsgerät gemeldet werden.

12. Verfahren nach Anspruch 11, wobei die Vielzahl von Netzwerkgeräten ferner mindestens ein Transitgerät, das sich zwischen dem Eingangsgerät und dem Ausgangsgerät befindet, umfasst und wobei das Verfahren ferner Folgendes umfasst:
Empfangen der Flusskennung der Ziel-Dienstflussgruppe und Übertragungsqualitätsinformationen der Ziel-Dienstflussgruppe, die durch das Transitgerät gemeldet werden, wobei die Übertragungsqualitätsinformationen, die durch das Transitgerät gemeldet werden, durch das Transitgerät basierend auf einem Detektionspaket, dem die Flusskennung der Ziel-Dienstflussgruppe hinzugefügt wurde, erlangt werden; und
das Bestimmen der Übertragungsqualität der Ziel-Dienstflussgruppe basierend auf der Flusskennung der Ziel-Dienstflussgruppe und den Übertragungsqualitätsinformationen der Ziel-Dienstflussgruppe, die durch das Eingangsgerät gemeldet werden, und der Flusskennung der Ziel-Dienstflussgruppe und den Übertragungsqualitätsinformationen der Ziel-Dienstflussgruppe, die durch das Ausgangsgerät gemeldet werden, Folgendes umfasst: Bestimmen der Übertragungsqualität der Ziel-Dienstflussgruppe basierend auf der Flusskennung der Ziel-Dienstflussgruppe und den Übertragungsqualitätsinformationen der Ziel-Dienstflussgruppe, die durch das Eingangsgerät gemeldet werden, der Flusskennung der Ziel-Dienstflussgruppe und den Übertragungsqualitätsinformationen der Ziel-Dienstflussgruppe, die durch das Transitgerät gemeldet werden, und der Flusskennung der Ziel-Dienstflussgruppe und den Übertragungsqualitätsinformationen der Ziel-Dienstflussgruppe, die durch das Ausgangsgerät gemeldet werden.

13. Vorrichtung zur Detektion einer Übertragungsqualität, wobei die Vorrichtung zur Detektion einer Übertragungsqualität dazu konfiguriert ist, das Verfahren zur Detektion einer Übertragungsqualität nach einem der Ansprüche 1 bis 8 zu implementieren.

14. Vorrichtung zur Detektion einer Übertragungsqualität, wobei die Vorrichtung zur Detektion einer Übertragungsqualität dazu konfiguriert ist, das Verfahren zur Detektion einer Übertragungsqualität nach einem der Ansprüche 9 bis 12 zu implementieren.

15. System (900) zur Detektion einer Übertragungsqualität, wobei das System eine Steuerung (910) und eine Vielzahl von Netzwerkgeräten (920, 930, 940) umfasst und die Vielzahl von Netzwerkgeräten ein Eingangsgerät und ein Ausgangsgerät umfasst, wobei
das Eingangsgerät zu Folgendem konfiguriert ist: Bestimmen eines Dienstpakets, das zu einer Ziel-Dienstflussgruppe gehört, anhand eines empfangenen Dienstpakets, Erlangen von Übertragungsqualitätsinformationen der Ziel-Dienstflussgruppe basierend auf einem Detektionspaket, das zu der Ziel-Dienstflussgruppe gehört, und Melden einer Flusskennung der Ziel-Dienstflussgruppe und der Übertragungsqualitätsinformationen der Ziel-Dienstflussgruppe an die Steuerung, wobei das Detektionspaket mindestens ein Dienstpaket, das zu der Ziel-Dienstflussgruppe gehört, umfasst, wobei die Dienstflussgruppe der Ziel-Dienstflussgruppe eine Vielzahl von Dienstflüssen, die durch 5-Tupel-Informationen identifiziert werden, beinhaltet, wobei die 5-Tupel-Informationen eine Quell-IP-Adresse, eine Ziel-IP-Adresse, einen Quell-Port, einen Ziel-Port und eine Protokollnummer beinhalten; und
die Steuerung dazu konfiguriert ist, eine Übertragungsqualität der Ziel-Dienstflussgruppe basierend auf der Flusskennung der Ziel-Dienstflussgruppe und den Übertragungsqualitätsinformationen der Ziel-Dienstflussgruppe, die durch das Eingangsgerät gemeldet werden, zu bestimmen, wobei das Dienstpaket, das zu der Ziel-Dienstflussgruppe gehört, eine beliebige oder eine Kombination einer Vielzahl der folgenden Bedingungen erfüllt: das Dienstpaket wird über ein Zielübertragungsnetzwerk übertragen, das Dienstpaket wird auf einem Zielübertragungspfad übertragen, das Dienstpaket wird über einen Zielport des Eingangsgeräts empfangen, das Dienstpaket wird über das Ausgangsgerät übertragen und das Dienstpaket weist eine Zielpriorität auf.

## Revendications

1. Procédé de détection de qualité de transmission, appliqué à un dispositif d'entrée dans un système de détection de qualité de transmission, dans lequel le système de détection de qualité de transmission comprend un dispositif de commande et une pluralité de dispositifs de réseau, la pluralité de dispositifs de réseau comprend le dispositif d'entrée et un dispositif de sortie, et le procédé comprend :
la détermination (203), à partir d'un paquet de service reçu, d'un paquet de service appartenant à un groupe de flux de services cible, dans lequel le groupe de flux de services cible comporte une pluralité de flux de services identifiés par des informations à 5 tuples, dans lequel les informations à 5 tuples comportent une adresse IP source, une adresse IP de destination, un port source, un port de destination et un numéro de protocole ;
l'obtention (206) d'informations sur la qualité de transmission du groupe de flux de services cible sur la base d'un paquet de détection appartenant au groupe de flux de services cible, dans lequel le paquet de détection comprend au moins un paquet de service appartenant au groupe de flux de services cible ; et
le rapportage (207) d'un identifiant de flux du groupe de flux de services cible et des informations de qualité de transmission du groupe de flux de services cible au dispositif de commande, pour permettre au dispositif de commande de déterminer la qualité de transmission du groupe de flux de services cible sur la base de l'identifiant de flux du groupe de flux de services cible et des informations de qualité de transmission du groupe de flux de services cible qui sont rapportées par le dispositif d'entrée, dans lequel le paquet de service appartenant au groupe de flux de services cible satisfait à l'une quelconque ou à une combinaison d'une pluralité des conditions suivantes : le paquet de service est transmis par le biais d'un réseau de transmission cible, le paquet de service est transmis sur un chemin de transmission cible, le paquet de service est reçu par le biais d'un port cible du dispositif d'entrée, le paquet de service est transmis par le biais du dispositif de sortie, et le paquet de service a une priorité cible.

2. Procédé selon la revendication 1, dans lequel la détermination, à partir d'un paquet de service reçu, d'un paquet de service appartenant à un groupe de flux de services cible comprend :
la détermination, à partir du paquet de service reçu sur la base des informations d'indication de détection cibles configurées sur le dispositif d'entrée, le paquet de service appartenant au groupe de flux de services cible, dans lequel les informations d'indication de détection cibles comprennent l'un quelconque ou une combinaison d'une pluralité d'éléments suivants : un identifiant du réseau de transmission cible pour la transmission du groupe de flux de services cible, un identifiant du chemin de transmission cible pour la transmission du groupe de flux de services cible, un identifiant du port cible qui se trouve sur le dispositif d'entrée et qui est destiné à recevoir le groupe de flux de services cible, un identifiant du dispositif de sortie pour la transmission du groupe de flux de services cible et une priorité du groupe de flux de services cible.

3. Procédé selon la revendication 2, dans lequel les informations d'indication de détection cibles sont :
l'identifiant du chemin de transmission cible pour la transmission du groupe de flux de services cible ;
l'identifiant du dispositif de sortie pour la transmission du groupe de flux de services cible ;
une combinaison de l'identifiant du réseau de transmission cible pour la transmission du groupe de flux de services cible et de l'identifiant du chemin de transmission cible pour la transmission du groupe de flux de services cible ; ou
une combinaison de l'identifiant du réseau de transmission cible pour la transmission du groupe de flux de services cible et de l'identifiant du dispositif de sortie pour la transmission du groupe de flux de services cible.

4. Procédé selon la revendication 2 ou 3, dans lequel l'identifiant du réseau de transmission cible comprend un identifiant de réseau privé virtuel, VPN ;
l'identifiant du chemin de transmission cible comprend un identifiant de tunnel ;
l'identifiant du port cible comprend un numéro de port du port cible ;
l'identifiant du dispositif de sortie comprend l'une quelconque des informations de localisation du dispositif de sortie, d'une adresse de protocole Internet, IP, du dispositif de sortie et d'une adresse de contrôle d'accès au support, MAC, du dispositif de sortie ; et
la priorité comprend l'une quelconque d'une priorité de point de code de services différenciés, DSCP, d'une priorité de type de service, TOS et d'une priorité 802.1p.

5. Procédé selon l'une quelconque des revendications 2 à 4, dans lequel
avant la détermination, à partir du paquet de service reçu sur la base des informations d'indication de détection cibles configurées sur le dispositif d'entrée, du paquet de service appartenant au groupe de flux de services cible, le procédé comprend également :
la réception des informations d'indication de détection cibles délivrées par le dispositif de commande.

6. Procédé selon l'une quelconque des revendications 1 à 5, dans lequel
après la détermination, à partir d'un paquet de service reçu, d'un paquet de service appartenant à un groupe de flux de services cible, le procédé comprend également :
l'ajout de l'identifiant de flux du groupe de flux de services cible au paquet de détection appartenant au groupe de flux de services cible ; et
l'envoi, à un dispositif de saut suivant du dispositif d'entrée, d'un paquet de détection ajouté avec l'identifiant de flux du groupe de flux de services cible, pour permettre au dispositif de saut suivant d'obtenir des informations de qualité de transmission du groupe de flux de services cible sur la base du paquet de détection ajouté avec l'identifiant de flux du groupe de flux de services cible.

7. Procédé selon la revendication 6, dans lequel l'ajout de l'identifiant de flux du groupe de flux de services cible au paquet de détection appartenant au groupe de flux de services cible comprend :
l'insertion d'un en-tête d'extension de détection dans le paquet de détection, dans lequel l'en-tête d'extension de détection comprend l'identifiant de flux du groupe de flux de services cible.

8. Procédé selon la revendication 7, dans lequel l'en-tête d'extension de détection est un en-tête d'extension de télémétrie d'informations de flux in situ, IFIT.

9. Procédé de détection de qualité de transmission, appliqué à un dispositif de commande dans un système de détection de qualité de transmission, dans lequel le système de détection de qualité de transmission comprend le dispositif de commande et une pluralité de dispositifs de réseau, la pluralité de dispositifs de réseau comprend un dispositif d'entrée et un dispositif de sortie, et le procédé comprend :
la réception (207) d'un identifiant de flux d'un groupe de flux de services cible et d'informations de qualité de transmission du groupe de flux de services cible qui sont rapportées par le dispositif d'entrée, dans lequel les informations de qualité de transmission sont obtenues par le dispositif d'entrée sur la base d'un paquet de détection appartenant au groupe de flux de services cible, et le paquet de détection comprend au moins un paquet de service appartenant au groupe de flux de services cible, dans lequel le groupe de flux de services du groupe de flux de services cible comporte une pluralité de flux de services identifiés par des informations à 5 tuples, dans lequel les informations à 5 tuples comportent une adresse IP source, une adresse IP de destination, un port source, un port de destination et un numéro de protocole ; et
la détermination (214) de la qualité de transmission du groupe de flux de services cible sur la base de l'identifiant de flux du groupe de flux de services cible et des informations de qualité de transmission du groupe de flux de services cible qui sont rapportées par le dispositif d'entrée, dans lequel le paquet de service appartenant au groupe de flux de services cible satisfait à l'une quelconque ou à une combinaison d'une pluralité des conditions suivantes : le paquet de service est transmis par le biais d'un réseau de transmission cible, le paquet de service est transmis sur un chemin de transmission cible, le paquet de service est reçu par le biais d'un port cible du dispositif d'entrée, le paquet de service est transmis par le biais du dispositif de sortie, et le paquet de service a une priorité cible.

10. Procédé selon la revendication 9, dans lequel avant la réception d'un identifiant de flux d'un groupe de flux de services cible et d'informations de qualité de transmission du groupe de flux de services cible qui sont rapportées par le dispositif d'entrée, le procédé comprend également :
la délivrance des informations d'indication de détection cibles au dispositif d'entrée, dans lequel les informations d'indication de détection cibles sont utilisées pour déterminer le paquet de service appartenant au groupe de flux de services cible et dans lequel
les informations d'indication de détection cible comprennent l'un quelconque ou une combinaison d'une pluralité des éléments suivants : un identifiant du réseau de transmission cible pour la transmission du groupe de flux de services cible, un identifiant du chemin de transmission cible pour la transmission du groupe de flux de services cible, un identifiant du port cible qui se trouve sur le dispositif d'entrée et qui est destiné à recevoir le groupe de flux de services cible, un identifiant du dispositif de sortie pour la transmission du groupe de flux de services cible et une priorité du groupe de flux de services cible.

11. Procédé selon la revendication 9 ou 10, dans lequel le procédé comprend également :
la réception de l'identifiant de flux du groupe de flux de services cible et d'informations de qualité de transmission du groupe de flux de services cible qui sont rapportées par le dispositif de sortie, dans lequel les informations de qualité de transmission rapportées par le dispositif de sortie sont obtenues par le dispositif de sortie sur la base d'un paquet de détection ajouté avec l'identifiant de flux du groupe de flux de services cible ; et
la détermination de la qualité de transmission du groupe de flux de services cible sur la base de l'identifiant de flux du groupe de flux de services cible et des informations de qualité de transmission du groupe de flux de services cible qui sont rapportées par le dispositif d'entrée comprend :
la détermination de la qualité de transmission du groupe de flux de services cible sur la base de l'identifiant de flux du groupe de flux de services cible et des informations de qualité de transmission du groupe de flux de services cible qui sont rapportées par le dispositif d'entrée et l'identifiant de flux du groupe de flux de services cible et des informations de qualité de transmission du groupe de flux de services cible qui sont rapportés par le dispositif de sortie.

12. Procédé selon la revendication 11, dans lequel la pluralité de dispositifs de réseau comprend également au moins un dispositif de transit situé entre le dispositif d'entrée et le dispositif de sortie, et le procédé comprend également :
la réception de l'identifiant de flux du groupe de flux de services cible et d'informations de qualité de transmission du groupe de flux de services cible qui sont rapportées par le dispositif de transit, dans lequel les informations de qualité de transmission rapportées par le dispositif de transit sont obtenues par le dispositif de transit sur la base d'un paquet de détection ajouté avec l'identifiant de flux du groupe de flux de services cible ; et
la détermination de la qualité de transmission du groupe de flux de services cible sur la base de l'identifiant de flux du groupe de flux de services cible et des informations de qualité de transmission du groupe de flux de services cible qui sont rapportées par le dispositif d'entrée et l'identifiant de flux du groupe de flux de services cible et des informations de qualité de transmission du groupe de flux de services cible qui sont rapportés par le dispositif de sortie comprend :
la détermination de la qualité de transmission du groupe de flux de services cible sur la base de l'identifiant de flux du groupe de flux de services cible et des informations de qualité de transmission du groupe de flux de services cible qui sont rapportées par le dispositif d'entrée et l'identifiant de flux du groupe de flux de services cible et des informations de qualité de transmission du groupe de flux de services cible qui sont rapportés par le dispositif de transit, et l'identifiant de flux du groupe de flux de services cible et des informations de qualité de transmission du groupe de flux de services cible qui sont rapportés par le dispositif de sortie.

13. Appareil de détection de qualité de transmission, dans lequel l'appareil de détection de qualité de transmission est configuré pour mettre en oeuvre le procédé de détection de qualité de transmission selon l'une quelconque des revendications 1 à 8.

14. Appareil de détection de qualité de transmission, dans lequel l'appareil de détection de qualité de transmission est configuré pour mettre en oeuvre le procédé de détection de qualité de transmission selon l'une quelconque des revendications 9 à 12.

15. Système de détection de qualité de transmission (900), dans lequel le système comprend un dispositif de commande (910) et une pluralité de dispositifs de réseau (920, 930, 940), et la pluralité de dispositifs de réseau comprend un dispositif d'entrée et un dispositif de sortie, dans lequel le dispositif d'entrée est configuré pour : déterminer, à partir d'un paquet de service reçu, d'un paquet de service appartenant à un groupe de flux de services cible, obtenir des informations de qualité de transmission du groupe de flux de services cible sur la base d'un paquet de détection appartenant au groupe de flux de services cible et rapporter un identifiant de flux du groupe de flux de services cible et d'informations de qualité de transmission du groupe de flux de services cible au dispositif de commande, dans lequel le paquet de détection comprend au moins un paquet de service appartenant au groupe de flux de services cible, dans lequel le groupe de flux de services du groupe de flux de services cible comporte une pluralité de flux de services identifiés par des informations à 5 tuples, dans lequel les informations à 5 tuples comportent une adresse IP source, une adresse IP de destination, un port source, un port de destination et un numéro de protocole ; et
le dispositif de commande est configuré pour déterminer la qualité de transmission du groupe de flux de services cible sur la base de l'identifiant de flux du groupe de flux de services cible et des informations de qualité de transmission du groupe de flux de services cible qui sont rapportées par le dispositif d'entrée, dans lequel
le paquet de service appartenant au groupe de flux de services cible satisfait à l'une quelconque ou à une combinaison d'une pluralité des conditions suivantes : le paquet de service est transmis par le biais d'un réseau de transmission cible, le paquet de service est transmis sur un chemin de transmission cible, le paquet de service est reçu par le biais d'un port cible du dispositif d'entrée, le paquet de service est transmis par le biais du dispositif de sortie, et le paquet de service a une priorité cible.
